# EUROPEAN PATENT SPECIFICATION

(11) **EP 1 816 782 B1**
(45) Date of publication and mention of the grant of the patent: **15.07.2015**
(21) Application number: 07075185.4
(22) Date of filing: 22.12.2000
(51) Int. Cl.: H04L 9/06, H04L 9/32

(54) **Encryptor, encrypting method, decriptor, decrypting method, and computer readable recording medium having program stored therein**
Verschlüsseler, Verschlüsselungsverfahren, Entschlüsseler, Entschlüsselungsverfahren und computerlesbares Aufzeichnungsmedium mit darauf gespeichertem Programm
Crypteur, procédé de cryptage, décrypteur, procédé de décryptage et support d'enregistrement lisible sur un ordinateur ayant un programme stocké dessus

(30) Priority: 14.01.2000 JP 2000005161
(43) Date of publication of application: 08.08.2007
(62) Divisional of application: 00987707.7
(73) Proprietor: MITSUBISHI DENKI KABUSHIKI KAISHA, Tokyo 100-8310 (JP)
(72) Inventor: Sorimachi, Toru, Tokyo 100-8310 (JP); Tokita, Toshio, Tokyo 100-8310 (JP)
(74) Representative: Pfenning, Meinig & Partner GbR

(56) References cited:
- DE-A1- 19 724 072
- US-A- 5 664 016
- US-A- 5 764 762
- US-A- 5 796 836
- MENEZES A J ET AL: "HANDBOOK OF APPLIED CRYPTOGRAPHY, PASSAGE" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 352-368, XP002302003 ISBN: 0-8493-8523-7

## Description

### Technical Field

The present invention relates to an encrypting apparatus, a decrypting apparatus and encrypting/decrypting method, in particular, to an invention which enables to encrypt/decrypt another piece of data while a certain piece of data is encrypted/decrypted.

### Background Art

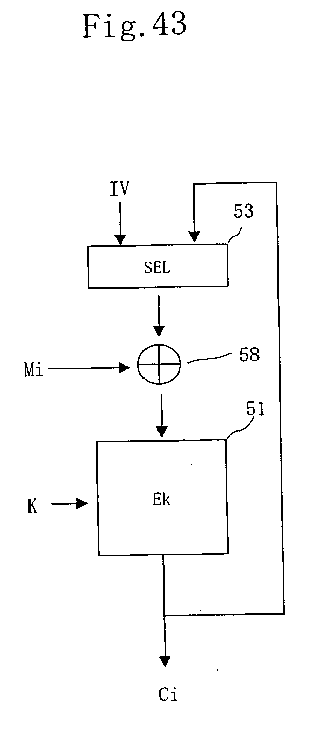

Fig. 43 shows a block diagram of an encryptor performing encryption of Cipher Block Chaining Mode (hereinafter, referred to as the CBC mode).

An encryption of the CBC mode is performed as follows: first, plaintext block data Mᵢ of 64 bits is input by block unit; the input data is encrypted by an encrypting module 51 using an encryption key K; ciphertext block data Cᵢ and plaintext block data Mᵢ₊₁, subsequent to the data Mᵢ, are XORed; and the XORed result is supplied to the encrypting module 51, for encryption using the encryption key K, as a next input for encrypting process. Then, this process is repeatedly chained, and the whole plaintext data M will be encrypted into ciphertext data C.

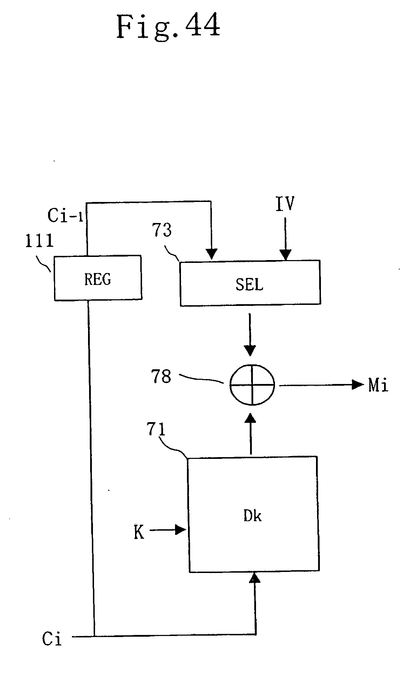

Fig. 44 shows a block diagram of a decrypting apparatus performing decryption of the CBC mode.

The decrypting apparatus shown in Fig. 44 is an apparatus for decrypting the ciphertext data encrypted by the encrypting apparatus shown in Fig. 43. The ciphertext block data C₁ is input to a decrypting module 71 for decryption using the encryption key K, XORed with an initial value IV, and decrypted into plaintext block data M₁. When ciphertext block data C₂ is input, the block data C₂ is decrypted by the decrypting module 71 using the encryption key K, XORed with the ciphertext block data C₁, which has been previously input and stored in a register 111, and decrypted into plaintext block data M₂.

Here, the register 111 can be provided inside a selector 73.

The CBC mode can be represented by the following expressions where plaintext block data is Mᵢ (i = 1, 2, ..., n), ciphertext block data Cᵢ (i = 1, 2, ..., n), the encrypting process using the encryption key K is defined as Eₖ, and the decrypting process using the encryption key K is defined as Dₖ:
C₁ = Eₖ (M₁ EXR IV)
Cᵢ = Eₖ (Mi EXR Cᵢ₋₁) (i = 2, 3, ..., n)
M₁ = Dₖ (C₁) EXR IV
Mᵢ = Dₖ (Cᵢ) EXR Cᵢ₋₁ (i = 2, 3, ..., n)

Here, EXR represents an XOR operation. IV represents an initial value to be used for an initial step of encrypting and decrypting processes. The same initial value IV is used both in the encryptor and the decryptor.

Fig. 45 shows an encryptor performing encryption of Output Feedback Mode (hereinafter, referred to as OFB mode).

Fig. 46 shows a decryptor performing decryption of the OFB mode.

Fig. 47 shows an encryptor performing encryption of Cipher Feedback Mode (hereinafter, referred to as CFB mode).

Fig. 48 shows a decryptor performing decryption according to the CFB mode.

Here, the register 111 can be provided inside the selector 73.

Fig. 49 is a block diagram showing a procedure for encrypting plaintext data M and plaintext data N using the encryptor of the CBC mode.

Hereinafter, a case in which the plaintext data M including plaintext block data M₁, plaintext block data M₂, and plaintext data M₃, and the plaintext data N including only plaintext block data N₁ will be explained.

When the encryption of plaintext block data M₁ is started, ciphertext block data C₁ is output, and the ciphertext block data C₁ is also used for encrypting process of plaintext block data M₂. In this way, ciphertext block data Cᵢ is fed back to the process of encrypting plaintext block data Mᵢ₊₁, which forms a chained process. Accordingly, it is not possible to encrypt the plaintext block data N₁ unless encrypting process of the plaintext block data M₁ through the plaintext block data M₃ has been finished.

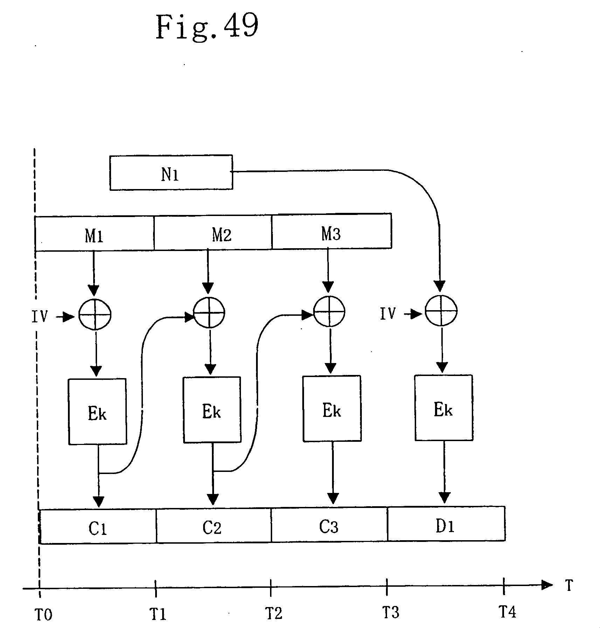

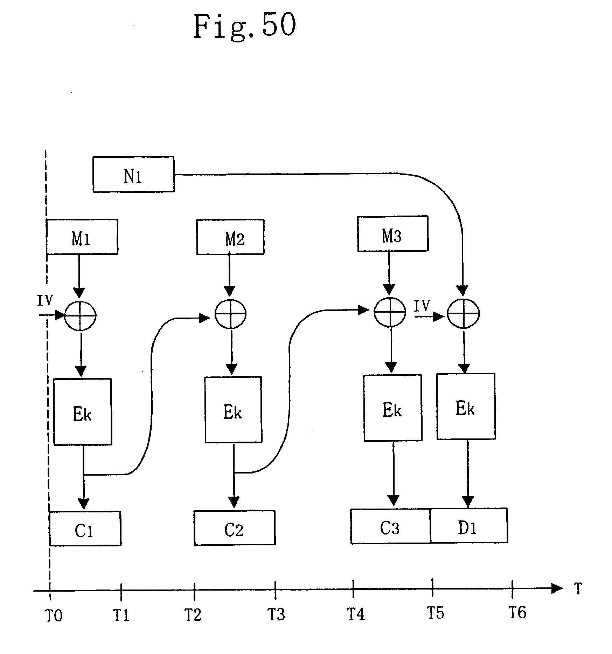

Fig. 50 shows the encrypting process of the CBC mode as well as Fig. 49.

In case of Fig. 50, it takes long to prepare each of the plaintext block data M₁, the plaintext block data M₂, and the plaintext block data M₃. While, the encryption has been finished before the next plaintext block data Mᵢ₊₁ is prepared, which generates an idle time (time between T1 through T2, T3 through T4). In this way, even if the idle time is generated, the chain process has to be performed such that the ciphertext block data Cᵢ should be fed back to the encrypting process of the plaintext data Mᵢ₊₁. Therefore, the process for the plaintext block data N₁ cannot be performed until the encrypting process of the plaintext block data M₃ is finished.

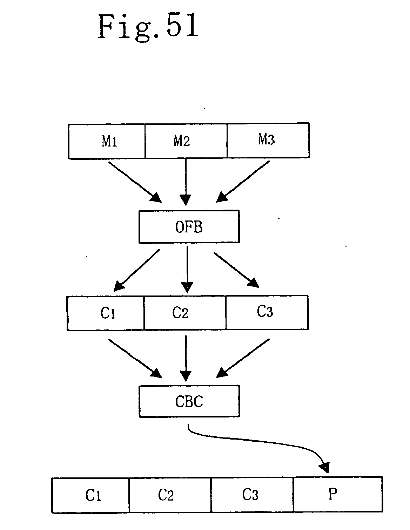

Fig. 51 shows a data confidentiality process and a data integrity ensuring process. The plaintext data M is, for example, encrypted into the ciphertext data C by the encryptor of the OFB mode. A message authentication code (MAC) P is computed by the encryptor of the CBC mode, and is appended to the last bit of the ciphertext data C. In case of receiving data which is encrypted and to which the MAC P is appended, as well as decrypting the ciphertext data C into the plaintext data M by the decryptor of the OFB mode, the MAC P is computed from the ciphertext data C by the decryptor of the CBC mode. It is possible to confirm the ciphertext data C transmitted has not tampered by comparing the obtained MAC P with the MAC P transmitted and received.

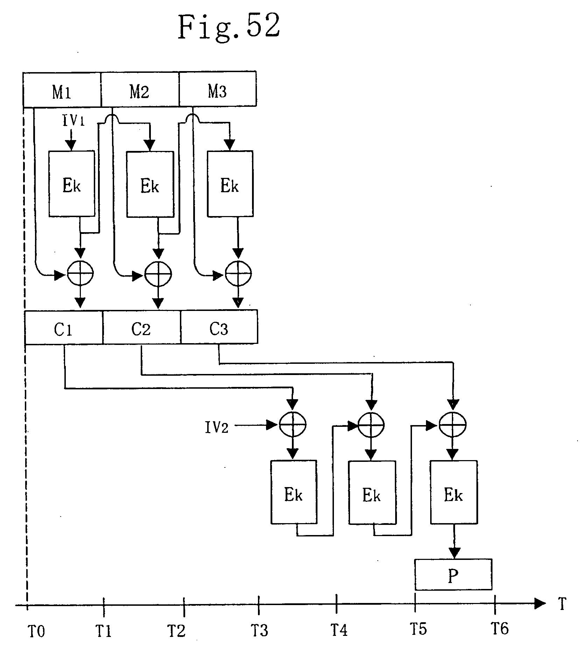

Fig. 52 shows a procedure for the confidentiality process and the MAC computing process shown in Fig. 51.

The plaintext block data M₁ through the plaintext block data M₃ are serially encrypted into the ciphertext block data C₁ through the ciphertext block data C₃. Subsequent, the MAC P is computed by serially inputting the ciphertext block data C₁ through ciphertext block data C₃.

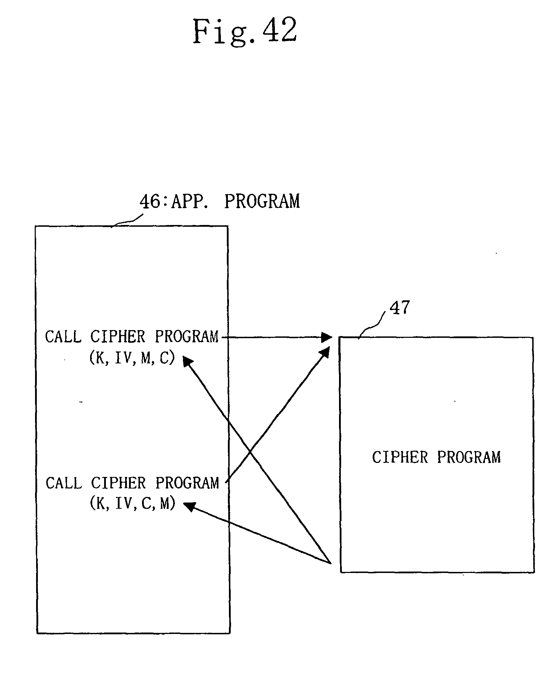

The encryptor and the decryptor of each mode shown in Figs. 42 through 48 has a problem as follows: the data obtained by encrypting and decrypting process of the previous block data should be fed back and used for encrypting and decrypting the next block data; there is a problem that once the encrypting process or the decrypting process is started, another encrypting process or another decrypting process cannot be started unless the whole steps of the encrypting process or the decrypting process are finished. Accordingly, if the encrypting/decrypting process, which is previously started, requires much time, the subsequent encrypting/decrypting process should wait for a long time.

Further, in case of performing the confidentiality process and the integrity ensuring process, the integrity ensuring process should be performed after performing the confidentiality process, which takes a long processing time.

Document US 5 764 762 discloses encrypted data package record for use in remote transaction metered data system.

It is an object of the preferred embodiment of the present invention to obtain an encryptor, a decryptor, an encrypting method, and a decrypting method which can perform encrypting/decrypting process of another piece of data while the encrypting/decrypting process of a certain piece of data is performed.

Further, it is another object of the preferred embodiment of the present invention to perform encryption/decryption of the data having a higher priority prior to other data.

Further, it is another object of the preferred embodiment of the present invention to perform the confidentiality process and the integrity ensuring process in parallel at a high speed.

### Disclosure of the Invention

According to the present invention, there are provided methods, apparatuses and computer readable storage mediums according to the independent claims.

### Brief Description of the Drawings

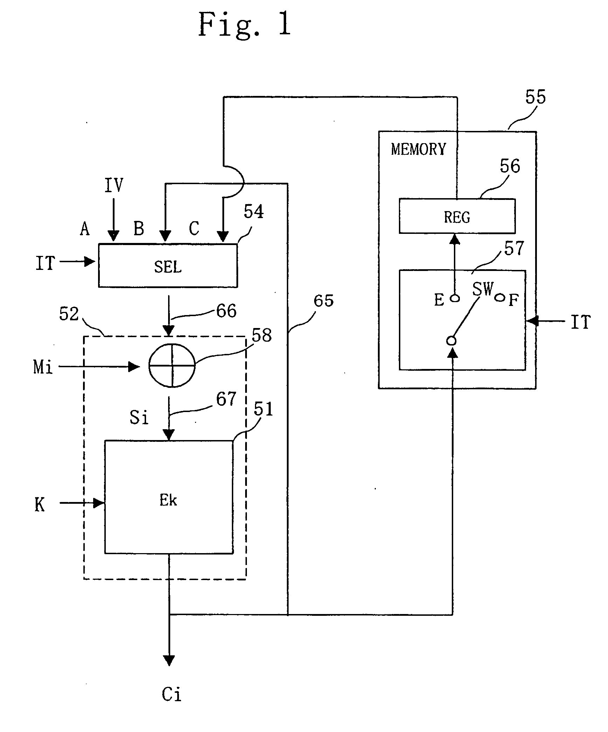

Fig. 1 shows an encryptor of the CBC mode according to the first embodiment.

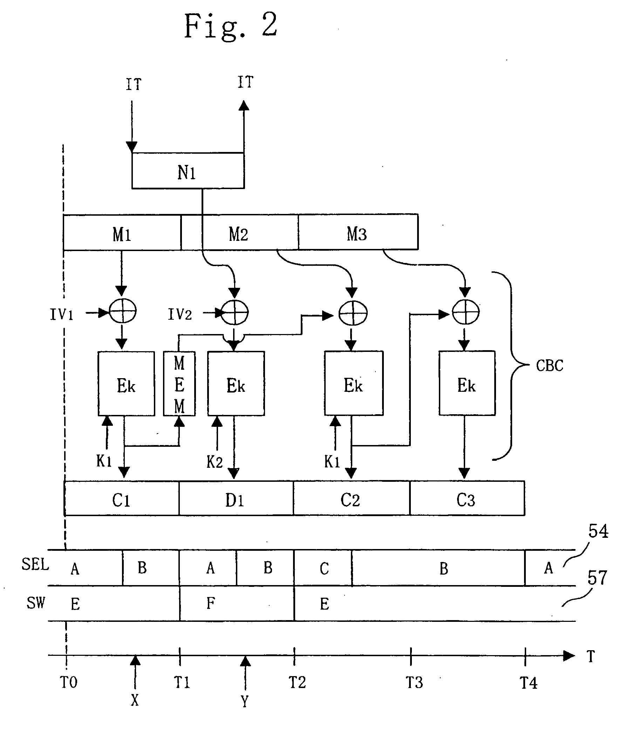

Fig. 2 shows an operation procedure of the encryptor of the CBC mode.

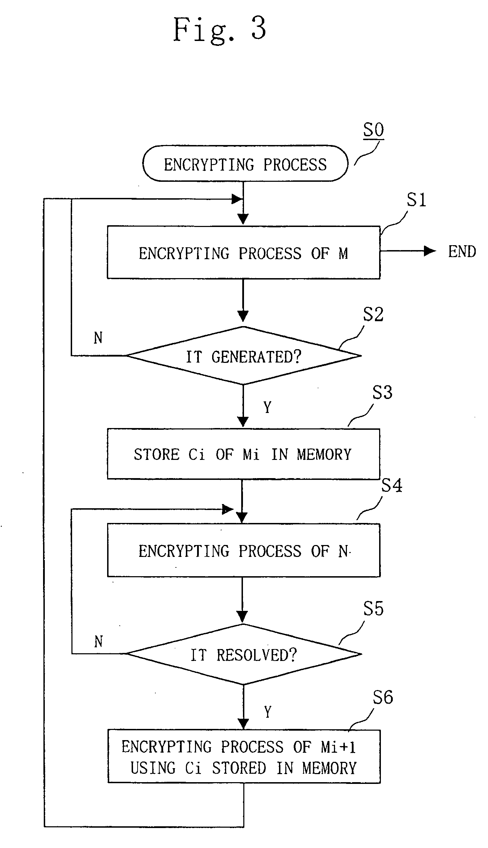

Fig. 3 is a flowchart showing an operation of the encryptor of the CBC mode.

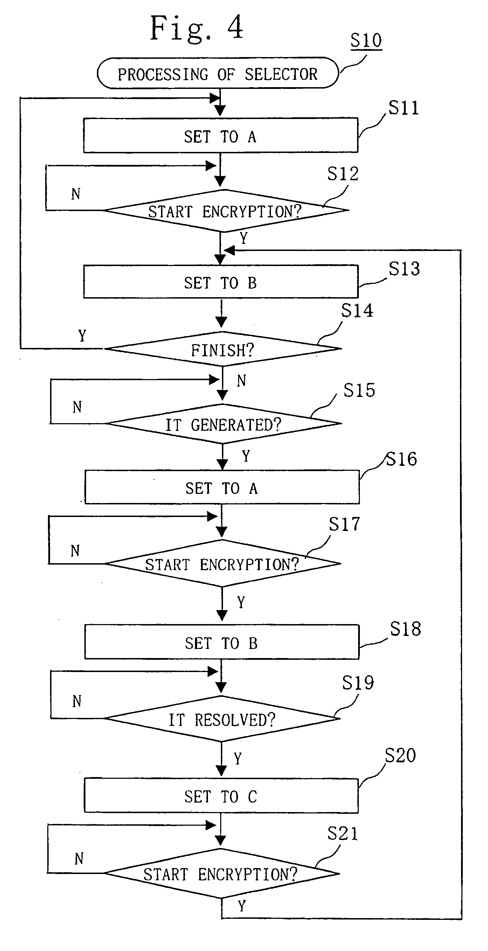

Fig. 4 is a flowchart showing an operation of a selector 54.

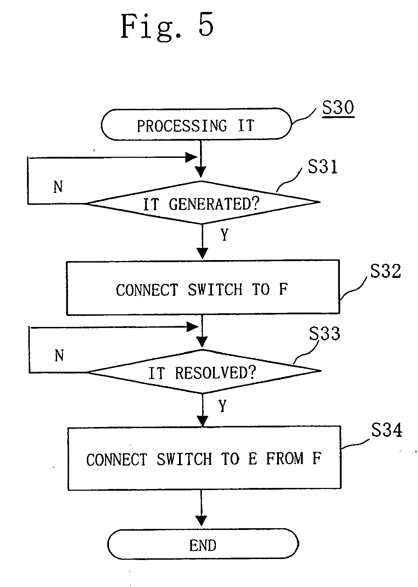

Fig. 5 is a flowchart showing an interrupting process of a switch 57.

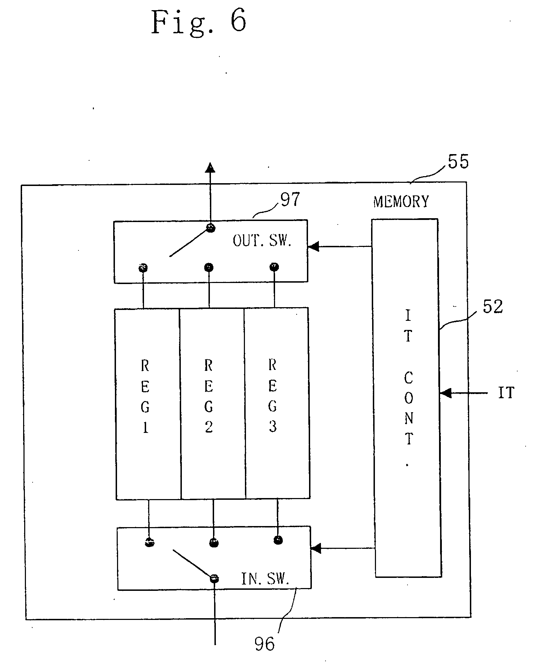

Fig. 6 shows another example of a memory 55.

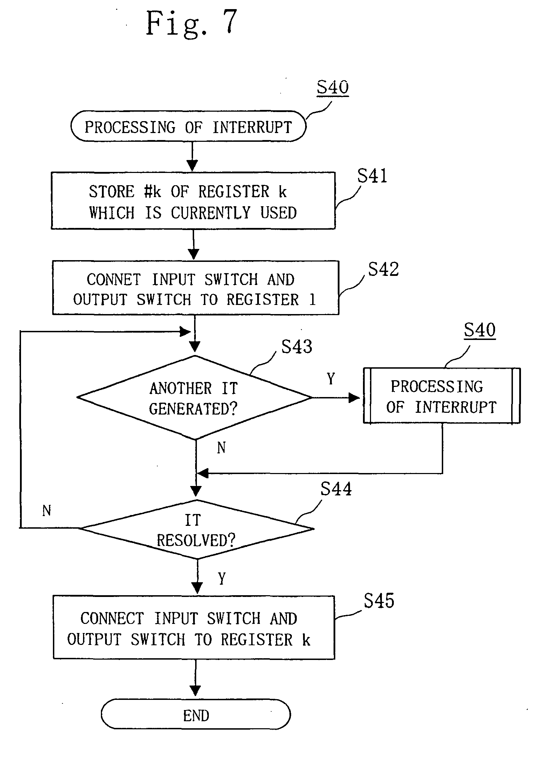

Fig. 7 is a flowchart showing an interrupting process of the memory 55.

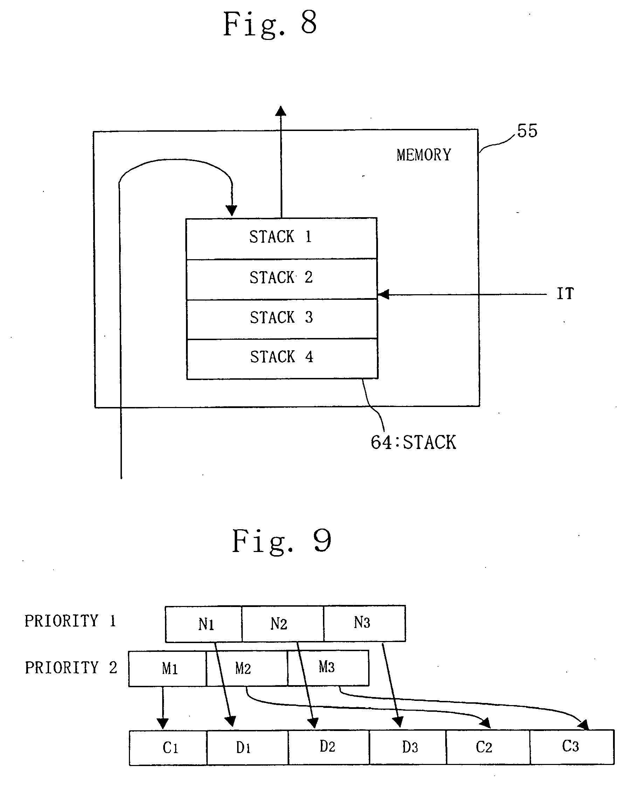

Fig. 8 shows another example of the memory 55.
Fig. 9 shows a priority processing.

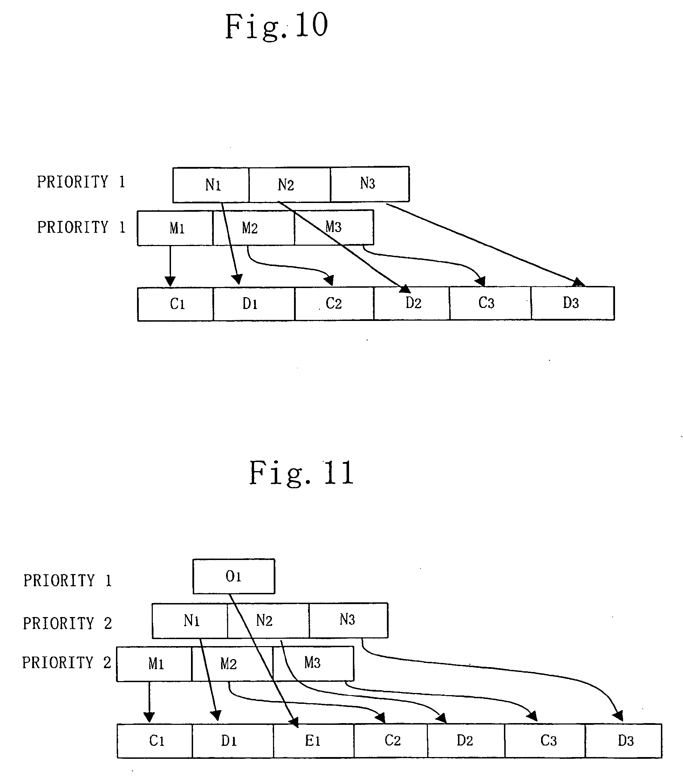

Fig. 10 shows another priority processing.
Fig. 11 shows another priority processing.

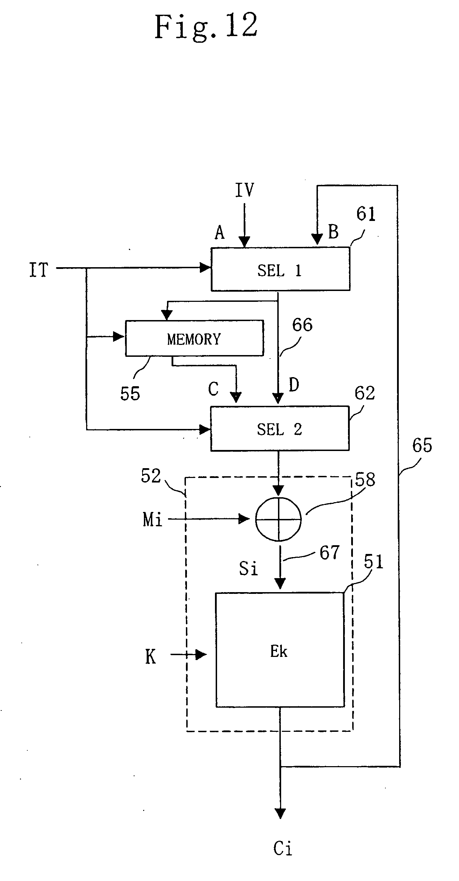

Fig. 12 shows a case in which the memory 55 is provided in parallel with a feedback line 66.

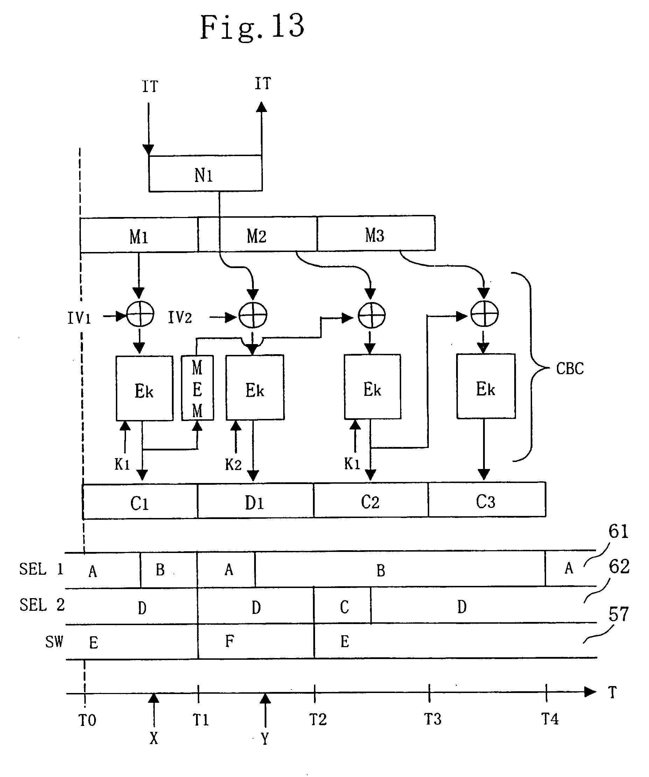

Fig. 13 shows an operation procedure of the encryptor of Fig. 12.

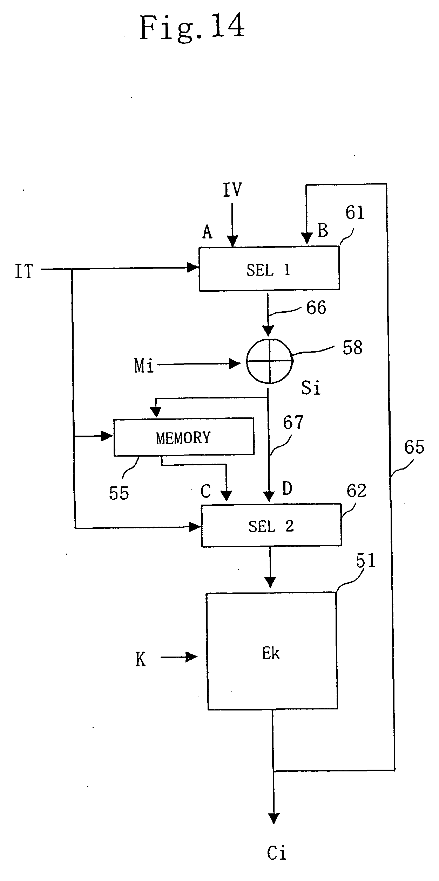

Fig. 14 shows a case in which the memory 55 is provided in parallel with a feedback line 67.

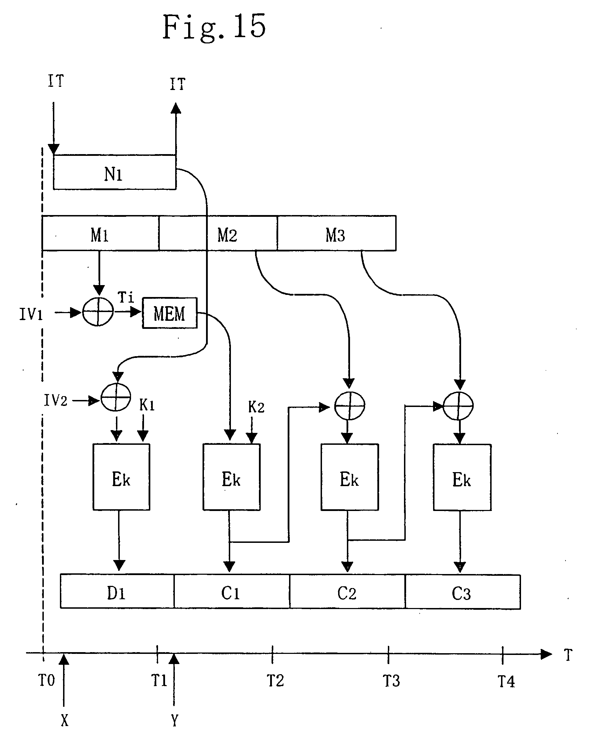

Fig. 15 shows an operation procedure of the encryptor of Fig. 14.

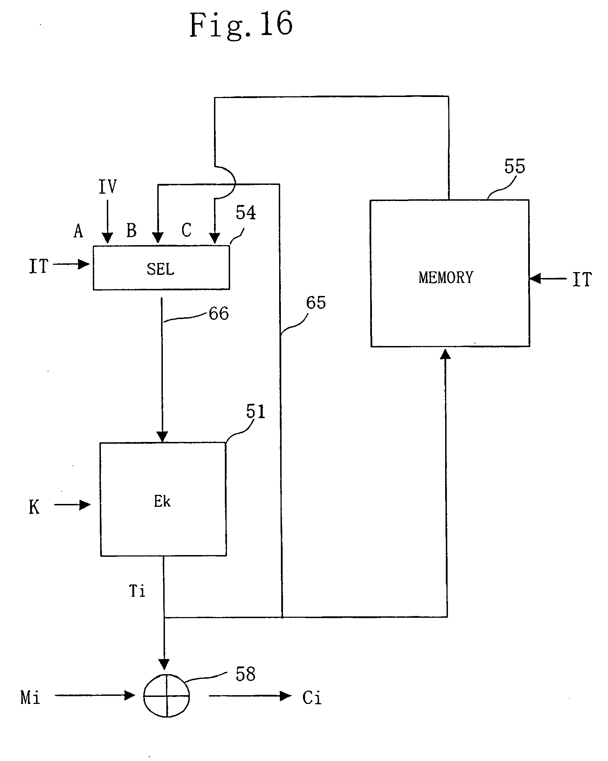

Fig. 16 shows an encryptor of the OFB mode.

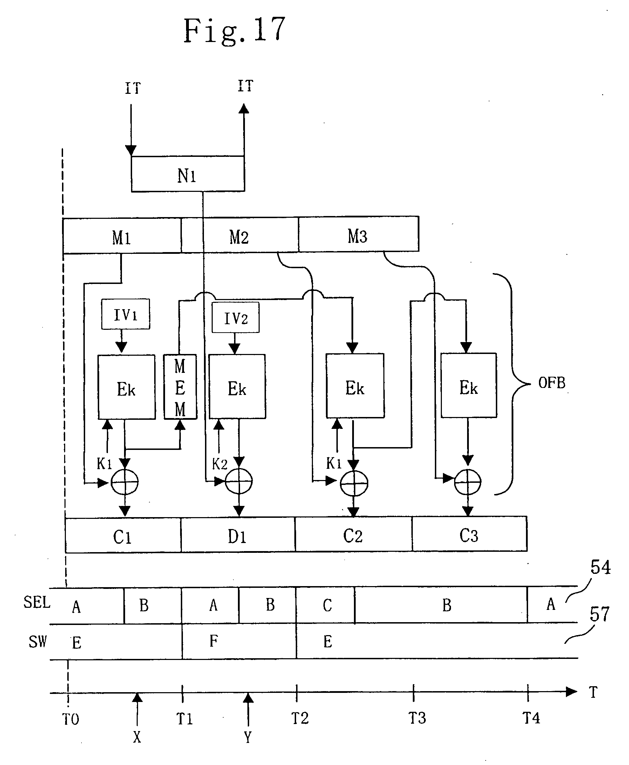

Fig. 17 shows an operation procedure of the encryptor of Fig. 16.

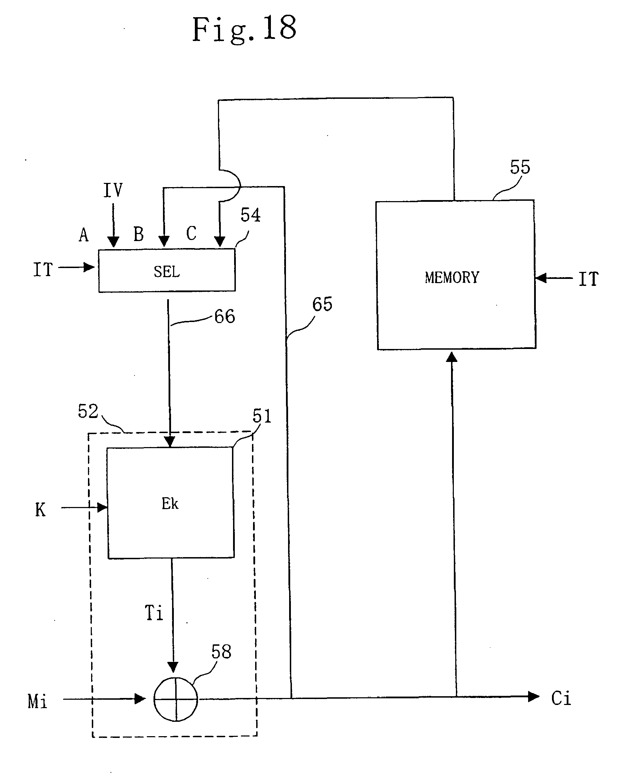

Fig. 18 shows an encryptor of the CFB mode.

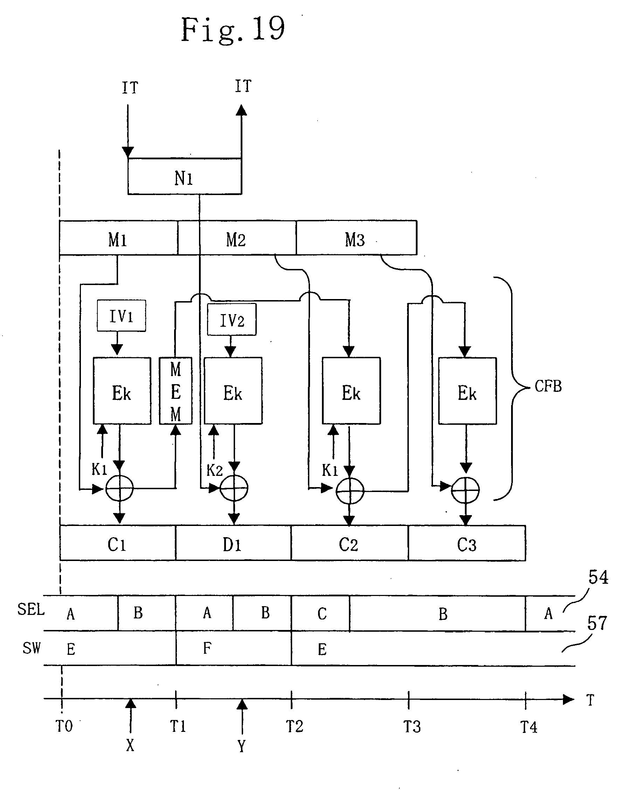

Fig. 19 shows an operation procedure of the encryptor of Fig. 18.

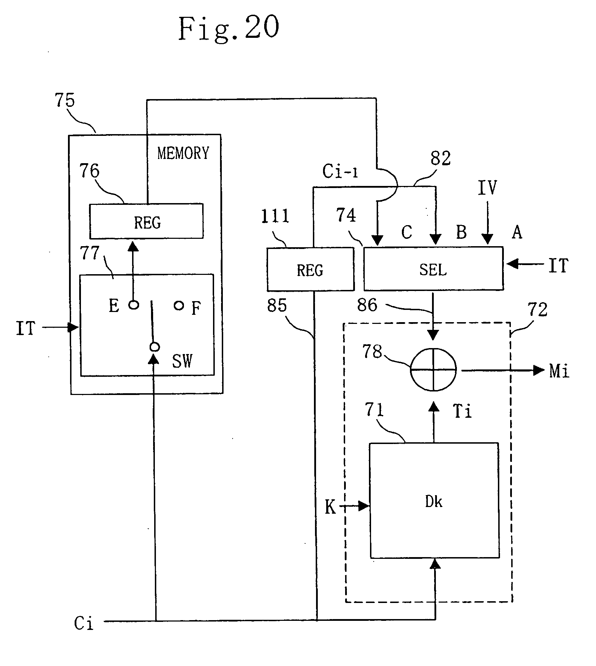

Fig. 20 shows a decryptor of the CBC mode.

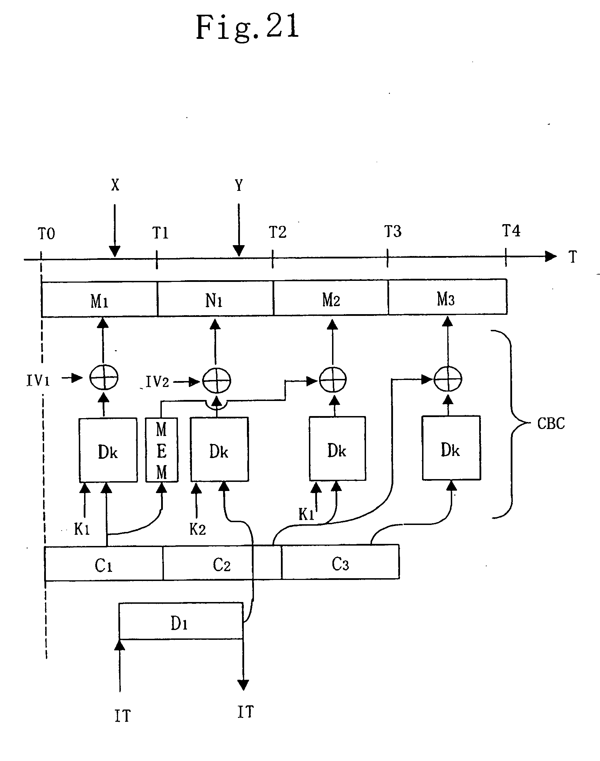

Fig. 21 shows an operation procedure of the decryptor of Fig. 20.

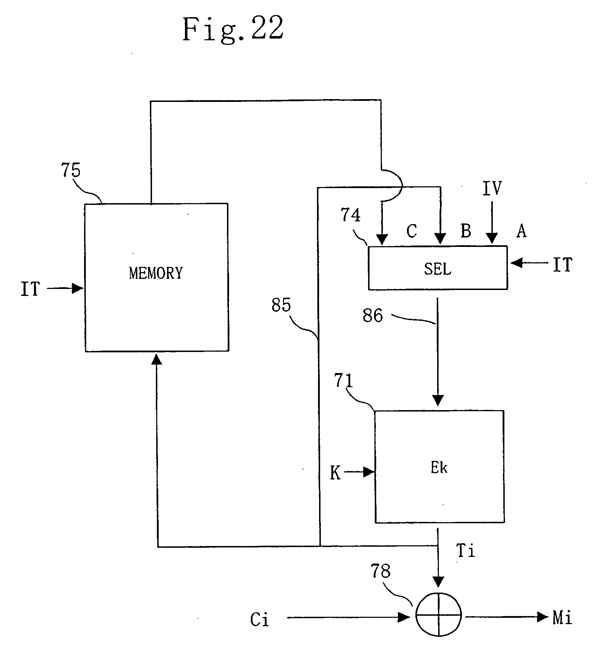

Fig. 22 shows a decryptor of the OFB mode.

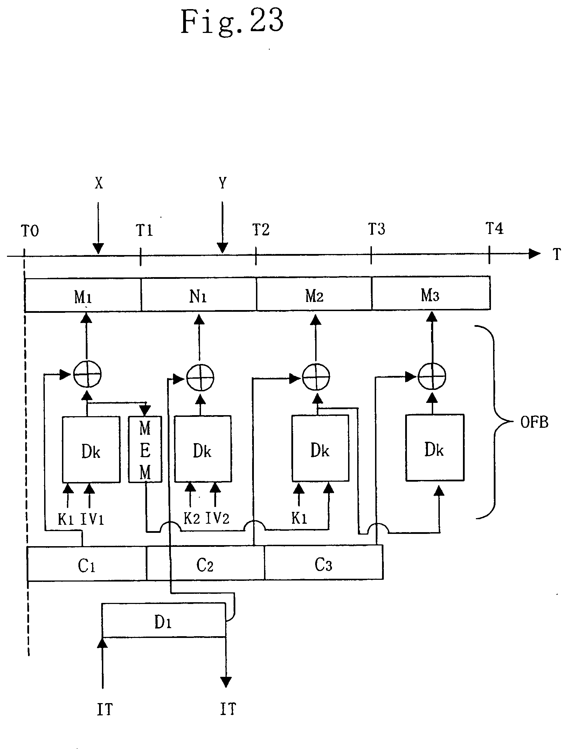

Fig. 23 shows an operation procedure of the decryptor of Fig. 22.

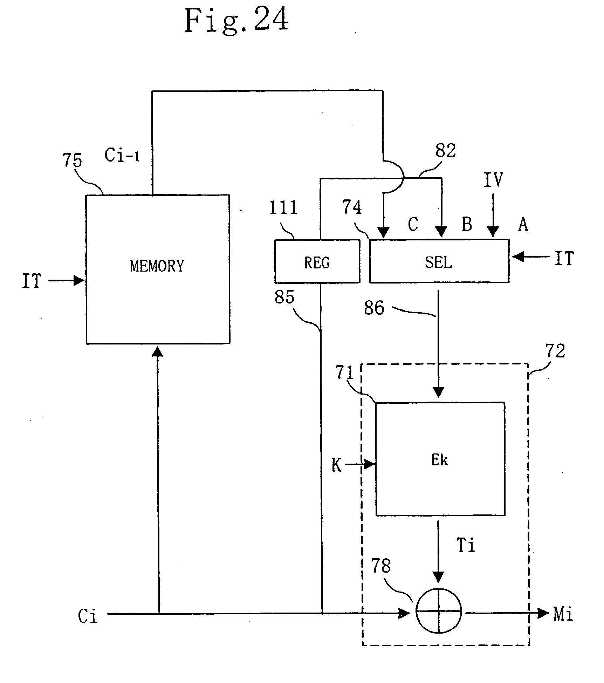

Fig. 24 shows a decryptor of the CFB mode.

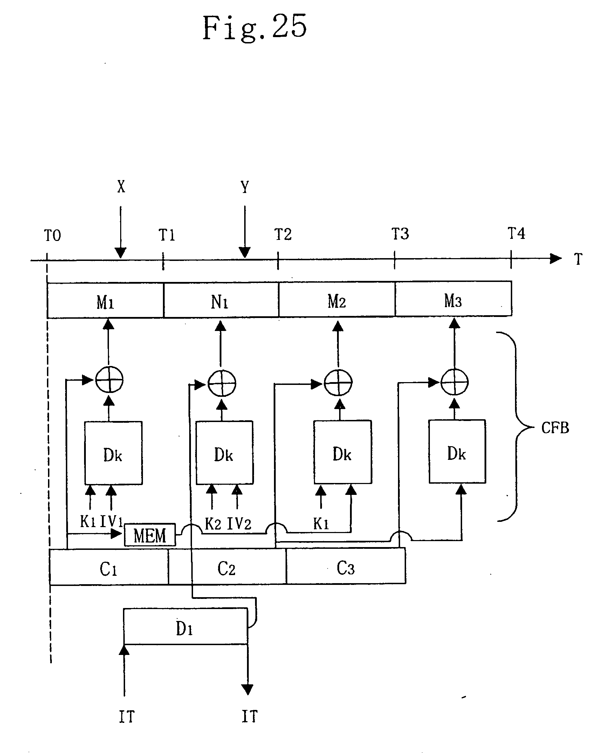

Fig. 25 shows an operation procedure of the decryptor of Fig. 24.

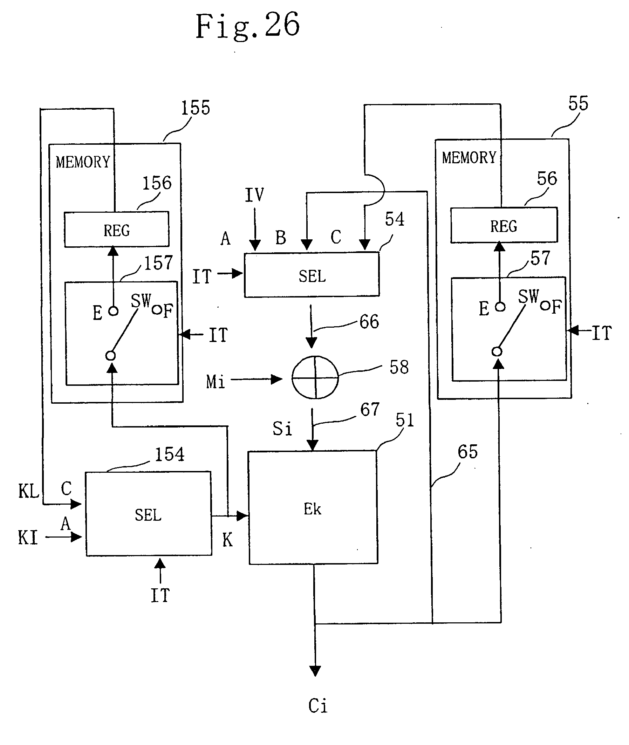

Fig. 26 shows an encryptor of the CBC mode storing a key.

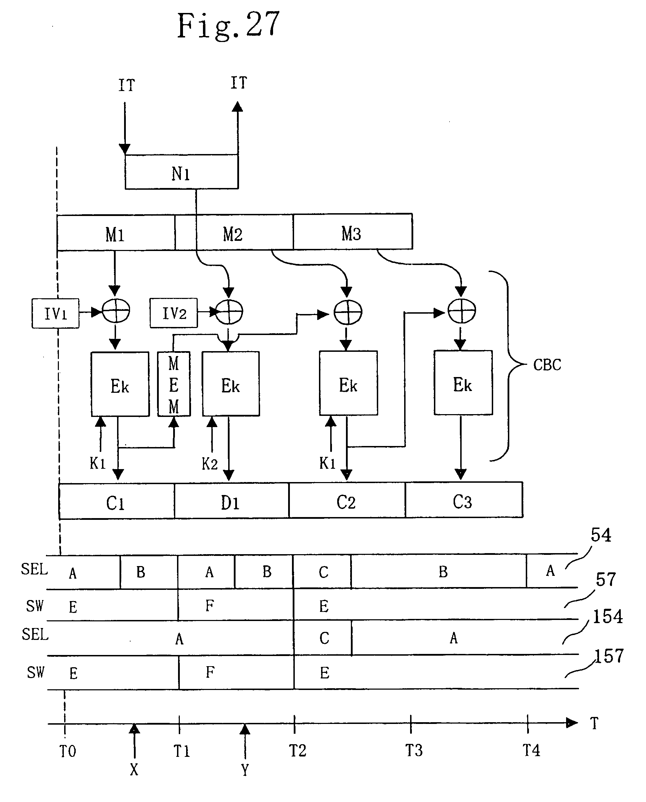

Fig. 27 shows an operation procedure of the encryptor of the CBC mode.

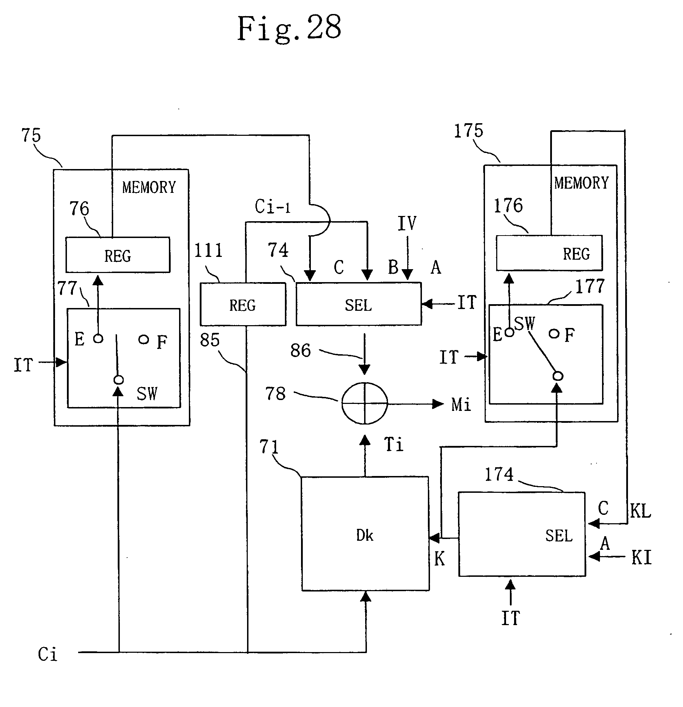

Fig. 28 shows a decryptor of the CBC mode storing a key.

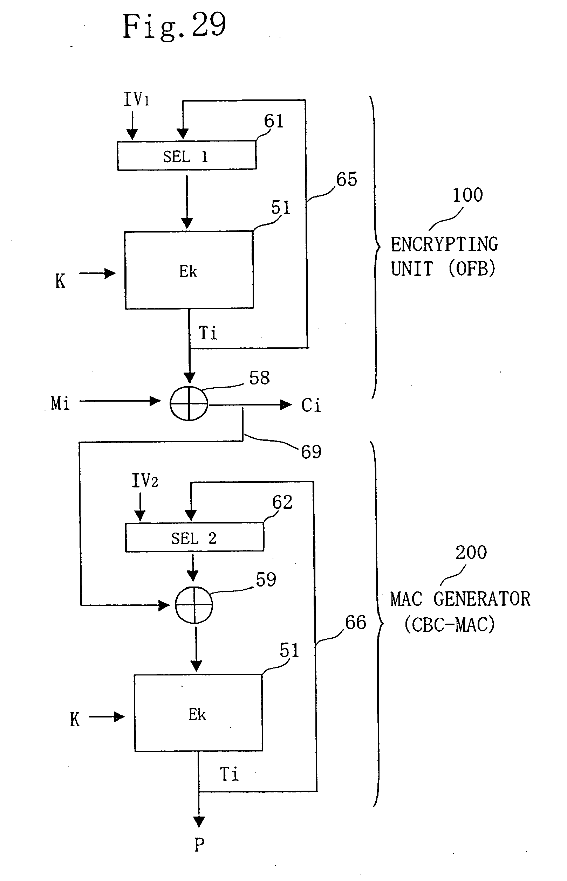

Fig. 29 shows an operation procedure of the decryptor of the CBC mode.

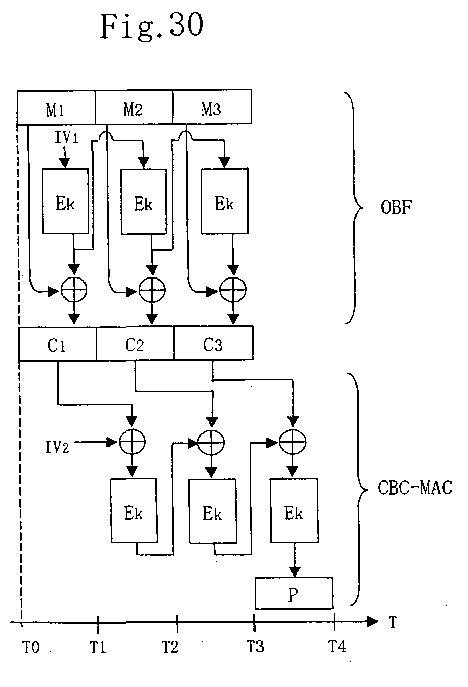

Fig. 30 shows an operation procedure of an encryptor having an encrypting unit 100 and a MAC generator 200.

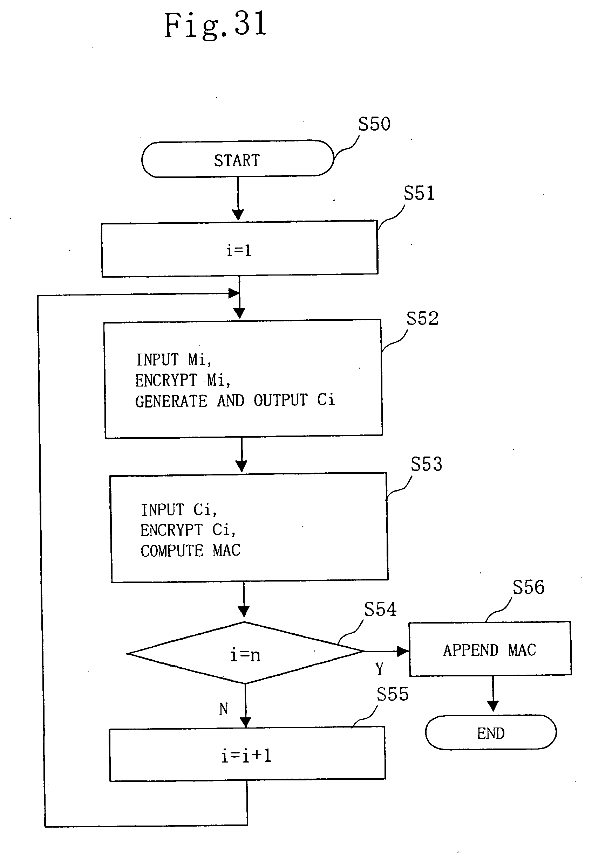

Fig. 31 shows a flowchart of an encryptor having an encrypting unit 100 and a MAC generator 200.

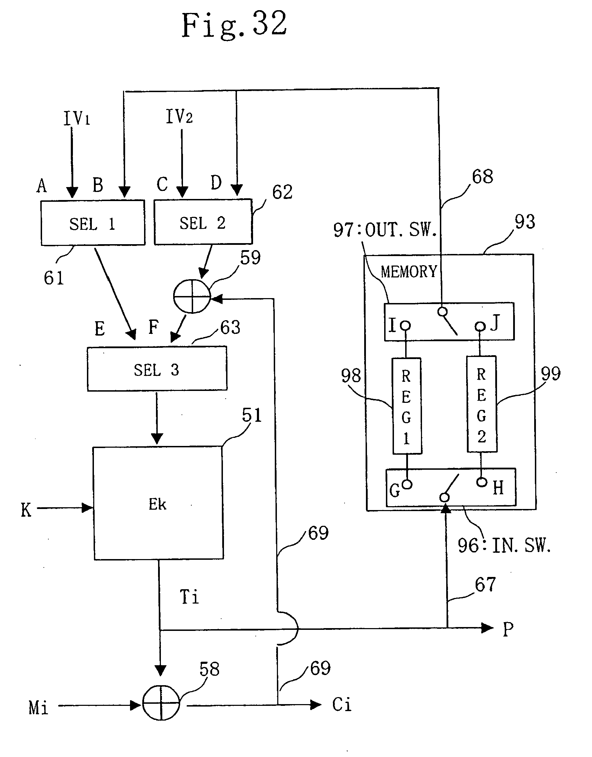

Fig. 32 shows an encryptor in which an encrypting unit 100 and a MAC generator 200 are united as one unit.

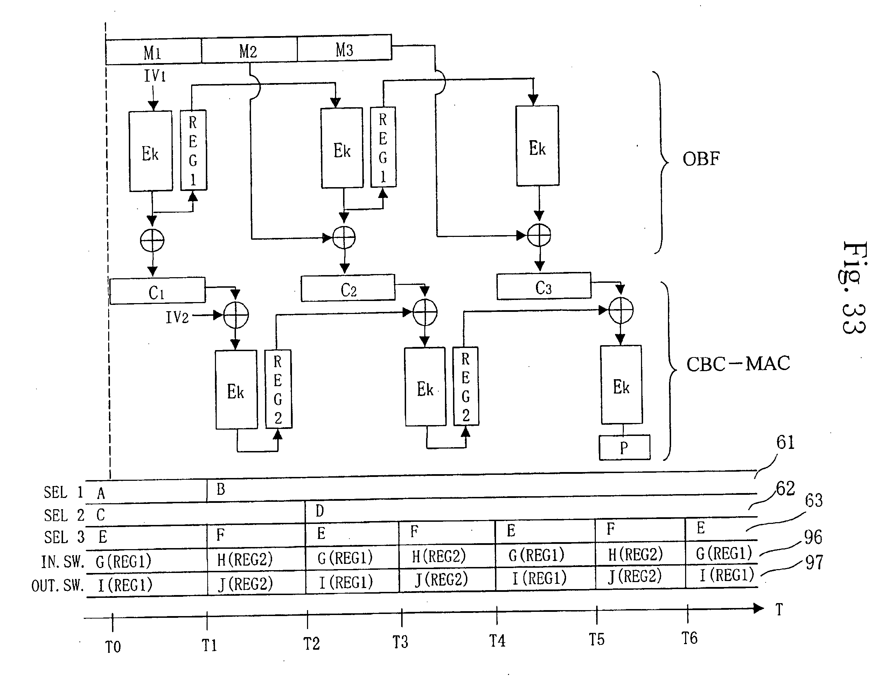

Fig. 33 shows an operation procedure of the encryptor in which an encrypting unit 100 and a MAC generator 200 are united as one unit.

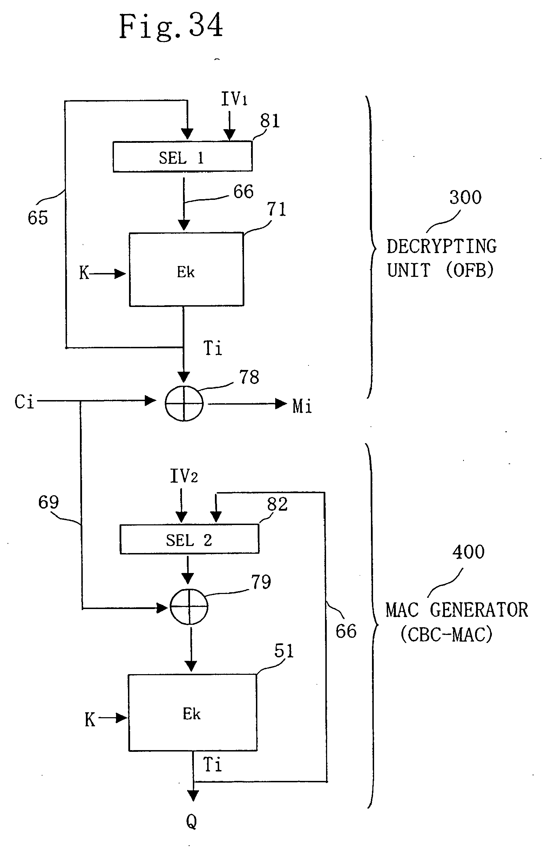

Fig. 34 shows a decryptor having a decrypting unit 300 and a MAC generator 400.

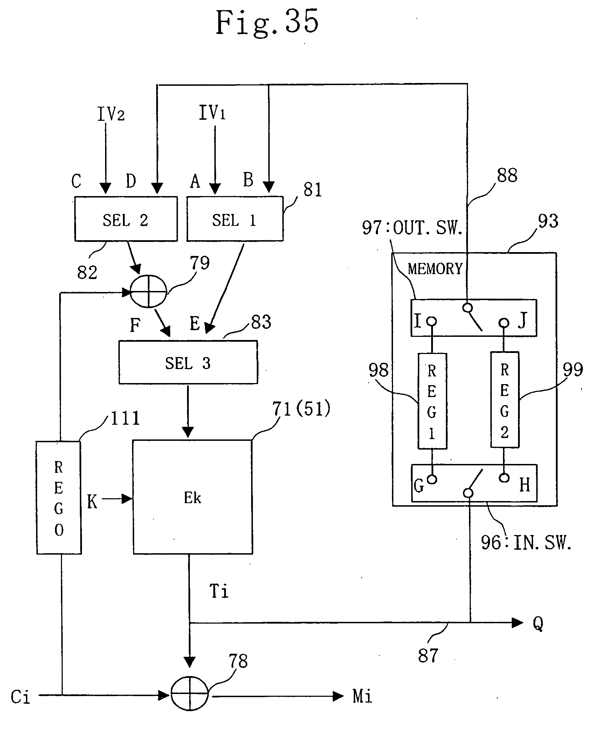

Fig. 35 shows a decryptor in which a decrypting unit 300 and a MAC generator 400 are united as one unit.

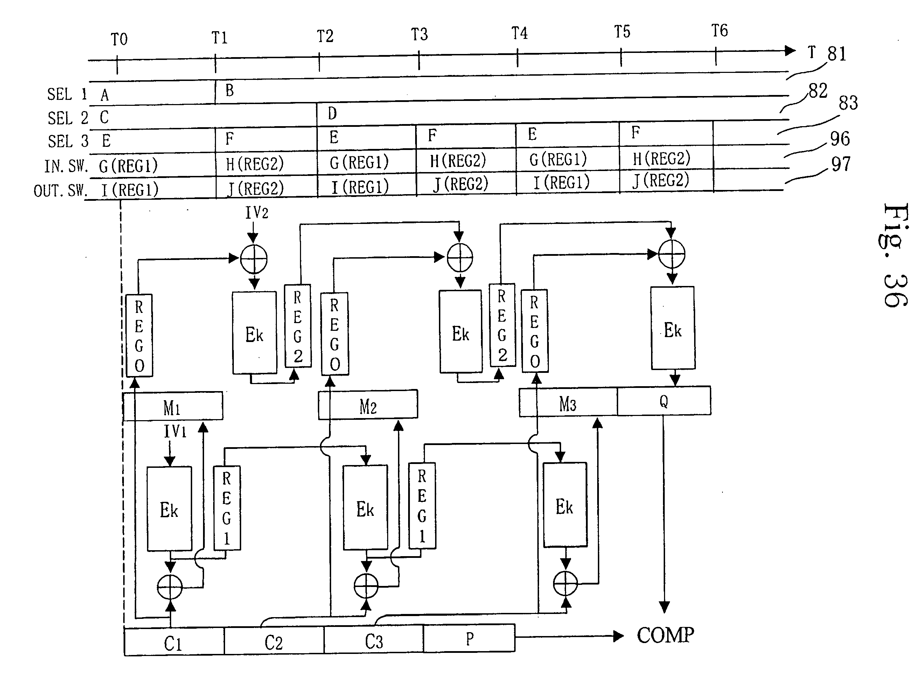

Fig. 36 shows an operation procedure of the decryptor in which a decrypting unit 300 and a MAC generator 400 are united as one unit.

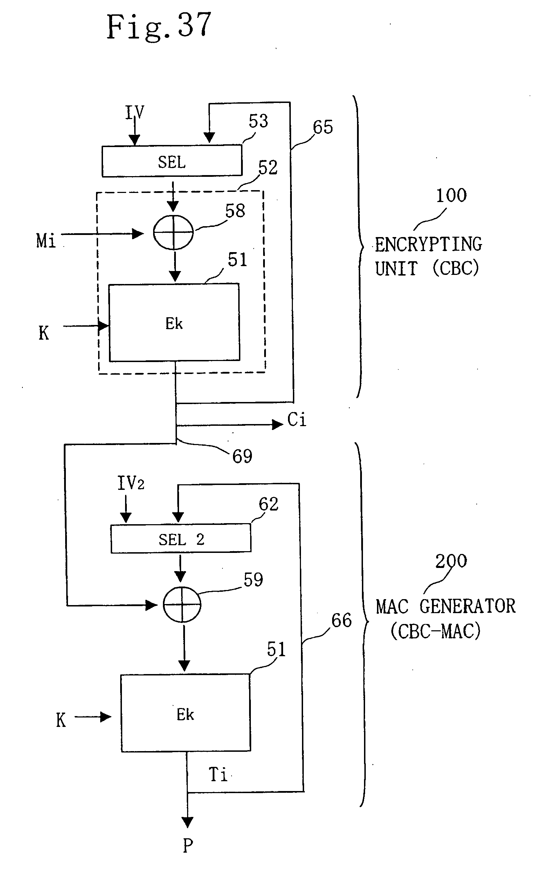

Fig. 37 shows an encryptor having an encrypting unit 100 and a MAC generator 200 according to the second embodiment.

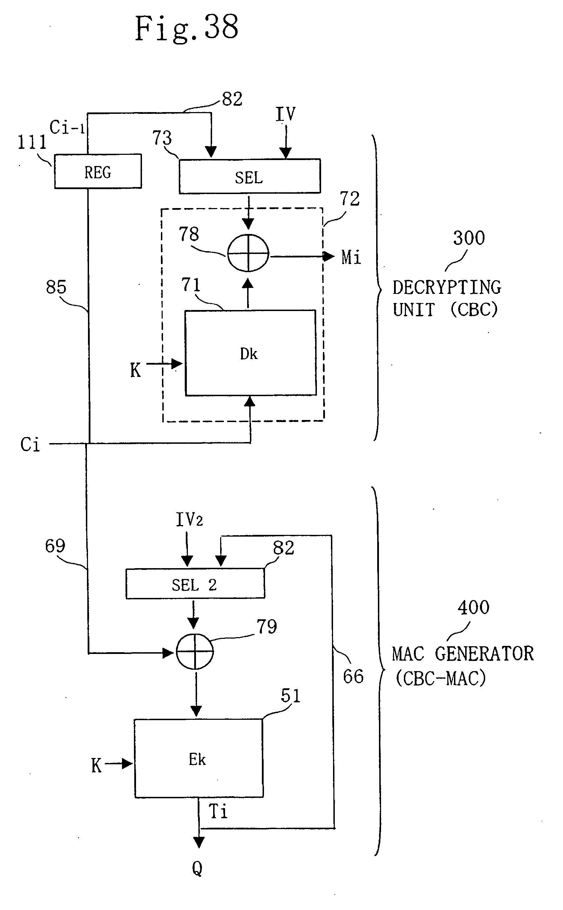

Fig. 38 shows a decryptor having a decrypting unit 300 and a MAC generator 400.

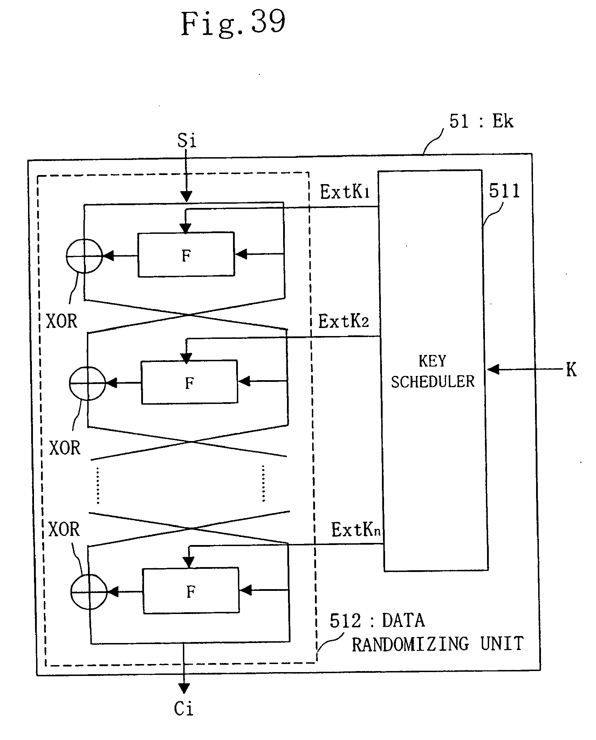

Fig. 39 shows a model configuration of an encrypting module 51 using an encryption key K.

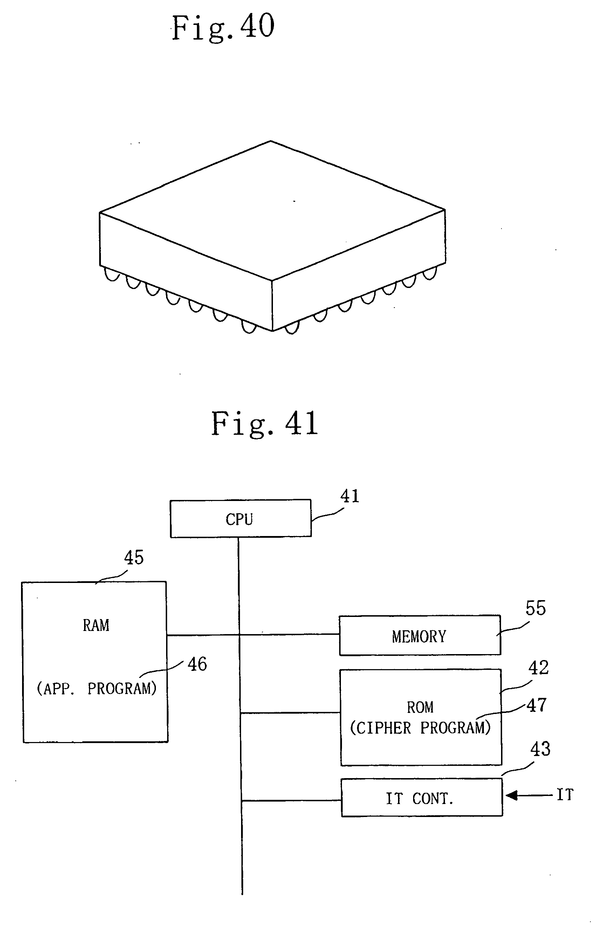

Fig. 40 shows an implementation example of a hardware of an encryptor and a decryptor.
Fig. 41 shows an implementation example of a hardware of an encryptor and a decryptor.
Fig. 42 shows a case in which an cipher program 47 is called by an application program 46.
Fig. 43 shows a conventional encryptor of the CBC mode.
Fig. 44 shows a conventional decryptor of the CBC mode.

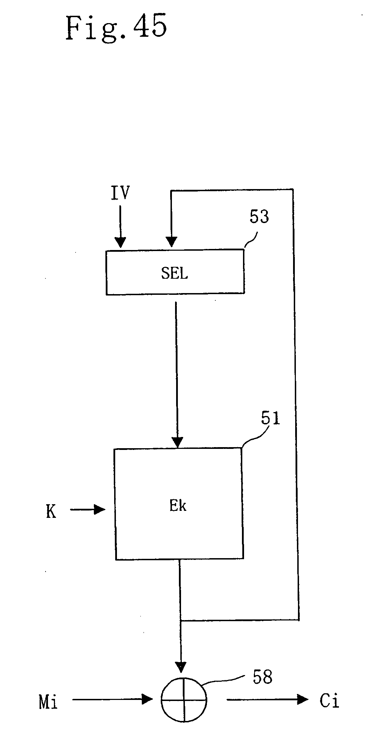

Fig. 45 shows a conventional encryptor of the OFB mode.

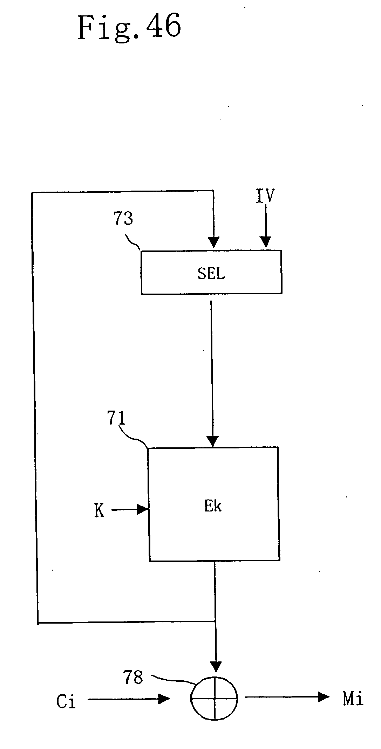

Fig. 46 shows a conventional decryptor of the OFB mode.

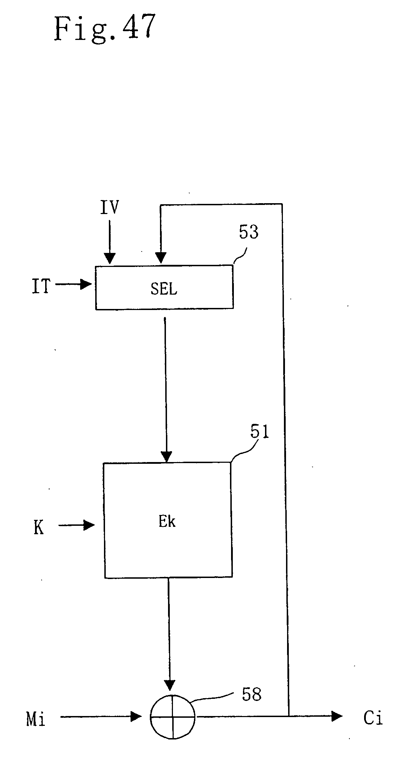

Fig. 47 shows a conventional encryptor of the CFB mode.

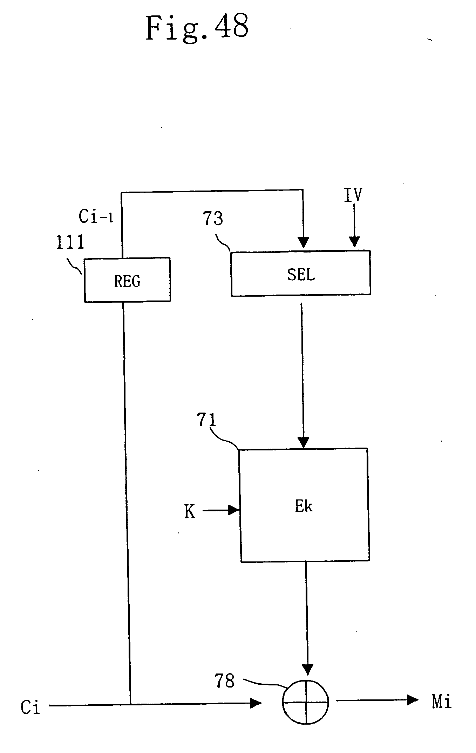

Fig. 48 shows a conventional decryptor of the CFB mode.
Fig. 49 shows a conventional encrypting procedure.
Fig. 50 shows a conventional encrypting procedure.
Fig. 51 explains a confidentiality process and an integrity ensuring process.
Fig. 52 shows an operation procedure of a conventional confidentiality process and a conventional integrity ensuring process.

### Best Mode for Carrying out the Invention

### Embodiment 1.

Fig. 1 shows an encryptor of the CBC mode according to the present embodiment.

The encryptor of the present embodiment is configured by a selector 54, an XOR circuit 58, an encrypting module 51 using an encryption key K, and a memory 55. An encrypting unit 52 includes the XOR circuit 58 and the encrypting module 51 using the encryption key K. The selector 54 and the encrypting module 51 using the encryption key K form a feedback loop with feedback lines 65, 66, and 67. Ciphertext block data Cᵢ encrypted by the encrypting module 51 using the encryption key K is input to the XOR circuit 58 again through the feedback loop, and module input data Sᵢ is generated at the XOR circuit 58. Then, the module input data Sᵢ generated is supplied to the encrypting module 51 using the encryption key K.

The memory 55 is provided in parallel with the feedback line 65. The memory 55 includes a register 56 and a switch 57. The switch 57 switches inputting to the register 56 or ignoring an output of the encrypting module 51 using the encryption key K. This switching is performed by, for example, an interrupt IT. When the interrupt IT is generated, the switch 57 is connected to E, and when the interrupt is resolved, the switch 57 is connected to F. The register 56 inputs and stores the ciphertext block data Cᵢ supplied through E. The ciphertext block data Cᵢ is output to the selector 54. The selector 54 is provided with three inputs A, B and C and selects one out of three. This selection is dependent on the interrupt IT.

Fig.2 shows an operation procedure of the encryptor shown in Fig. 1.

Fig. 3 is a flowchart showing an operation of the encryptor shown in Fig. 1.

The input of the selector 54 is set to A when the electric power is supplied to the encryptor, and the switch 57 is connected to E. Further, when plaintext data N is requested to encrypt, an interrupt IT is generated. The interrupt IT keeps ON unless the request to encrypt the plaintext data N is resolved. Further, the plaintext data M is encrypted using the key K₁, and the plaintext data N is encrypted using the key K₂. When the interrupt IT is generated or the interrupt IT is resolved, the key K₁ or the key K₂ is supplied again to the encrypting module.

At the time of T0, the key K₁ is supplied, and the encrypting process of the plaintext data M₁ is started. When the encrypting process of the plaintext data M₁ is started at the time of T0, the input of the selector 54 is switched to B after the initial value IT is once input from the input A of the selector 54. Further, at the time of X during the plaintext data M₁ is being encrypted using the key K₁, it is assumed an interrupt IT for requesting to encrypt the plaintext block data N₁ is generated. The ciphertext block data C₁ becomes to be stored in the memory 55 by the time of T1. Then, at the time of T1, the key K₂ is supplied to the encrypting module 51 due to the generation of the interrupt IT. Further, the selector 54 sets the input to A at the time of T1. The switch 57 is connected to F at the time of T1. After the time of T1, the plaintext block data N₁ is encrypted using the key K₂, and the ciphertext block data D₁ is output. At the time of Y, it is assumed the encryption of the plaintext block data N₁ is finished, and the interrupt IT is resolved. Due to the resolution of the interrupt IT, at the time of T2, the key K₁ is supplied to the encrypting module 51, the input of the selector 54 is switched to C, and the switch 57 is connected to E. By switching the selector 54 to C, the ciphertext block data C₁ stored in the memory 55 is input for encrypting the plaintext block data M₂, the plaintext block data M₂ is encrypted by the encrypting module using the key K₁, and the ciphertext block data C₂ is output. Before the time of T3, the input of the selector 54 is switched to B. In case of encrypting the plaintext block data M₃, the ciphertext block data C₂ is fed back from a feedback line 65 of a feedback loop and input, the plaintext block data M₃ is encrypted by the encrypting module using the key K₁, and the ciphertext block data C₃ is output.

When the same keys are used for encrypting the plaintext data M and the plaintext data N (K₁ = K₂), it is sufficient to supply the key only once at the starting time of the encrypting process.

A whole operation will be explained referring to the flowchart of Fig. 3.

At step S1, the encrypting process of the plaintext data M is started and continued. When the final block data is finished to be processed, the encrypting process terminates. At step S2, an interrupt IT generated at an arbitrary timing is observed. When the interrupt IT is generated while the plaintext block data Mᵢ is processed, at step S3, the ciphertext block data Cᵢ which is being processed is stored in the register 56 of the memory 55. At step S4, the encrypting process of the plaintext data N, which is requested to be encrypted by the interrupt IT, is performed. This encrypting process of step S4 is continuously performed until the interrupt IT is released as shown in step S5. When the interrupt IT is released, at step S6, the plaintext block data Mᵢ is encrypted using the ciphertext block data Cᵢ stored in the register 56 of the memory 55. Afterwards, the process returns to step S1, and the encrypting process will be continued.

Fig. 4 shows an operation of the selector 54.

When the electric power is turned ON, the input is set to A as shown at step S11. When the encrypting process starts at step S12, the input is set to B at step S13. Namely, the ciphertext block data Cᵢ fed back from the feedback line 65 of the feedback loop is used. At step S14, if it is detected the block data which is being processed is the final data, the process returns to step S11 in which the status is the same as the electric power is turned ON. At step S15, if it is detected the interrupt IT is generated, the input is set to A at step S16, and if the encrypting process is started, the input is set to B at step S18. Until the interrupt IT is resolved, the input is kept to B. That is, the ciphertext block data Cᵢ fed back from the feedback line 65 of the feedback loop is used. At step S19, if it is detected the interrupt IT is resolved, the input is set to C at step S20. By setting the input to C, the ciphertext block data Cᵢ stored in the memory 55 is input. When the encrypting process using the input from C, the process returns to step S13 and the input is set to B.

As described above, the selector 54 can be switched based on the generation of the interrupt IT.

The encrypting process of the plaintext data M can be also started at an arbitrary time based on the generation of the interrupt IT.

Fig. 5 is a flowchart which shows processing the interrupt by the switch 57.

When the electric power is turned ON and in case of the encrypting process of the first plaintext thereafter, the switch 57 is connected to E. When the interrupt IT is generated at step S31, the switch 57 is switched from E to F. Then, at step S33, it is detected the interrupt IT is resolved, the switch 57 is switched from F to E. In this way, the switch 57 ignores the ciphertext block data Cᵢ from the generation to the resolution of the interrupt. Accordingly, the register 56 of the memory 55 holds the ciphertext block data Cᵢ, which was generated at generating time of the interrupt IT.

As described above, the operations of the encryptor illustrated in Figs. 1 through 5 show the interrupt processing mechanism which receives the request to encrypt the plaintext data N before completion of the encryption of the plaintext data M in the encryptor for encrypting the plaintext block data Mᵢ (i = 1, 2, 3, ...) included in the plaintext data M and the plaintext block data Nⱼ (j = 1, 2, 3, ...) included in the plaintext data N.

Further, the encryptor shown in Figs. 1 through 5 includes the encrypting module 51 for encrypting the plaintext block data Mᵢ and outputting the ciphertext block data Cᵢ, the feedback loop 65 and 66 for feeding the ciphertext block data Cᵢ output from the encrypting module 51 back to the encrypting unit 52 via the feedback line 65, and the memory 55, provided in parallel with the feedback line 65 of the feedback loop, for receiving the encryption request of the plaintext data N by the interrupt, and storing the ciphertext block data Cᵢ fed back if the plaintext block data Mᵢ₊₁ is not encrypted subsequent to the plaintext block data Mᵢ by starting the encrypting process of any of the plaintext block data N.

Further, the encryptor shown in Figs. 1 through 5 includes the selector 54 for selecting the ciphertext block data Cᵢ, fed back by the feedback line 65 of the feedback loop, and supplying the ciphertext block data Cᵢ through the feedback loop when the plaintext block data Mᵢ₊₁ is encrypted subsequent to the plaintext block data Mᵢ, and for selecting the ciphertext block data Cᵢ stored in the memory 55 and supplying to the encrypting unit 52 through the feedback loop when the plaintext block data Mᵢ₊₁ is not encrypted next to the plaintext block data Mᵢ, and the any piece of the plaintext data N.

The memory 55 stores the status of the encryptor in case of the interrupt IT is generated. By storing the status of encrypting process, it becomes possible to return to the original status of encrypting a certain piece of data even if the encryption of another piece of data is performed during the certain piece of data is encrypted. Namely, by using the data stored in the memory, the status of the encryptor can return to the status which is completely identical to the status at the time when the encryption is interrupted, which enables to continue the interrupted encrypting process.

Fig. 6 shows another configuration example of the memory 55.

The memory 55 includes an interrupt control unit 52, an input switch 96, an output switch 97, and plural registers (REG 1, 2, 3). By providing the plural registers in this way, it becomes possible to receive plural interrupts.

Fig. 7 shows processing the interrupt performed by the memory 55.

When the interrupt IT is generated, at step S41, the number k, which is the number of the register k being currently used, is stored. At step S42, the input switch 96 and the output switch 97 are connected to the register 1, which is one of the registers except the register k. At this status, the encrypting process of the plaintext data N is performed. Further, it is observed if another interrupt is generated during the plaintext data N is encrypted. When it is detected another interrupt IT is generated at step S43, the step S40, which is the process for processing the interrupt, is called again. In this way, whenever the interrupt IT is generated, the step S40 is recursively called. Consequently, plural hierarchical processes for processing the interrupt can be performed. At step S44, it is checked if the interrupt is resolved. When the interrupt is resolved, the input switch 96 and the output switch 97 are switched to the register k using the number k stored in the memory. In case of Fig. 6, the memory 55 includes three registers, so that 3 layer hierarchical processes for processing the interrupt can be performed.

Fig. 8 shows another configuration example of the memory 55.

The memory 55 includes a stack 64. The stack 64 is a register of first-in last-out (FILO). When the interrupt IT is generated during a stack 1 is used, the data stored in the stack 1 is transferred to a stack 2, and the data thereafter is stacked in the stack 1. When the interrupt IT is resolved, the stacked data in the stack 1 is output, and the data stored in the stack 2 is returned to the stack 1. Fig. 8 shows a case in which 4 layer hierarchical processes for processing the interrupt can be performed.

As shown in Fig. 6, when it is possible to perform plural hierarchical processes for processing the interrupt, a priority can be assigned to each of the interrupts. For example, a priority 1 is assigned to the interrupt IT1, and a priority 2, which means a lower priority than the priority 1, is assigned to the interrupt IT2. By assigning the priority in this way, it is possible to postpone the process for the priority 2 when the interrupt IT1 having the priority 1 is generated.

Fig. 9 shows a case in which the encrypting process having the priority 1 is performed prior to the encrypting process having the priority 2. In this case, the encrypting process having the priority 1 is finished first.

Fig. 10 shows a case in which both encrypting processes have the same priorities.

When the priorities are the same, each of the plaintext block data of the both encrypting processes is encrypted alternately.

Fig. 11 shows a case in which data having the priority 1 and data having the priority 2 are encrypted.

By assigning the priority to each interrupt as shown in Figs. 9 through 11, it is possible to perform the encrypting process which is desirable for the user. In case of processing data of an urgent matter or data with a short length, effective processing can be performed by assigning a higher priority to such data.

Fig. 12 shows a case in which the memory 55 is placed in parallel with the feedback line 66.

The XOR circuit 58 and the encrypting module 51 using the encryption key K constitute the encrypting unit 52.

Fig. 13 shows an operation procedure of the encryptor of Fig. 12.

When the following connections are selected by the first selector 61 and the second selector 62, which enables these selectors to operate in the same manner as the selector 54 of Fig. 1.
the first selector 61 + the second selector 62 = the selector 54

| | | | |
|---|---|---|---|
| A | + | D | = A |
| B | + | D | = B |
| A | + | C | = C |
| B | + | C | = C |

In Fig. 13, when the second selector 62 selects D, the selection (A or B) of the first selector 61 becomes effective, and when the second selector 62 selects C, the contents of the memory 55 is output. Namely, the second selector 62 should select C if the contents of the memory 55 is desired to be used (when the encrypting process is returned from the plaintext data N to the plaintext data M due to the resolution of the interrupt IT).

Fig. 14 shows a case in which the memory 55 is placed in parallel with the feedback line 67.

Fig. 15 shows an operation procedure of the encryptor of Fig. 14.

If the time X when the interrupt IT is generated is before XOR operation by the XOR circuit 58, the memory 55 stores the module input data Sᵢ XORed by the XOR circuit 58. Then, the plaintext block data N₁ is encrypted. Subsequent, the second selector 62 is made to select and input the module input data Sᵢ to the encrypting module 51 using the encryption key K, and encrypted to output the ciphertext block data C₁.

As shown in Figs. 1, 12, and 14, the memory 55 can be placed in parallel with any one of the feedback line 65, the feedback line 66 and the feedback line 67. The memory 55 stores the status which is just before the encryptor starts encrypting another piece of data during encrypting a certain piece of data. The memory 55 can be placed at any place as long as the encryptor can return to the original status using the data stored in the memory 55 when the encryptor finishes encrypting the other data. Further, the memory 55 can be provided at plural locations.

As described above, the encryptor according to the present embodiment performs encrypting process of the first processing data (plaintext M) including at least one block data Mᵢ (i = 1, 2, 3, ..., m) and the second processing data (plaintext N) including at least one block data Nⱼ (j = 1, 2, 3, ..., n) and the encryptor includes the memory 55 for storing the status of encrypting process. The encryptor starts encrypting the first block data of the second processing data before encrypting all of the block data (M₁-Mₘ) of the first processing data. And at the time when the encryptor starts encrypting the first block data N₁ of the second processing data, the state of the encryption of the first processing data (for example, ciphertext block data Cᵢ) is stored in the memory 55. When the encryptor restarts encrypting the first processing data, the status of the encryption of the encryptor is returned to the stored status of the encryption of the first processing data, and then the encryptor restarts processing encryption of the first processing data.

Further, the encryptor restarts encrypting the first processing data before completing the encryption of data of all blocks (N₁-Nₙ) of the second processing data, and simultaneously the memory 55 stores the status of the encryption of the second processing data (for example, ciphertext block data Dⱼ) when the encryptor restarts encrypting the first processing data. When the encryptor restarts encrypting the second processing data, the status of the encryption of the encryptor is returned to the stored status of the encryption of the second processing data, and then the encryptor restarts encrypting the second processing data.

Fig. 16 shows a configuration of the encryptor of the OFB mode.

The figure is characterized by additionally including the memory 55. The memory 55 stores module output data T₁ supplied from the encrypting module 51.

Fig. 16 shows an encryptor for encrypting plaintext block data Mᵢ (i = 1, 2, 3, ...) included in the plaintext data M and plaintext block data Nⱼ (j = 1, 2, 3, ...) included in the plaintext data N. The encryptor includes a processing mechanism of the interrupt that receives the request to encrypt the plaintext data N during the encryption of the plaintext data M before the completion of encrypting the plaintext data M and the encrypting module 51 for outputting encrypted data as the module output block data Tᵢ. The encryptor further includes feedback loops 65 and 66 for feeding back the module output block data Tᵢ supplied from the encrypting module 51 to the encrypting module through the feedback line 65, and the memory 55 provided in parallel with the feedback line 65 of the feedback loop and for receiving a request to encrypt the plaintext data N and storing the module output block data Tᵢ fed back when the plaintext block data Mᵢ₊₁ is not encrypted subsequent to the plaintext block data Mᵢ because the encryptor starts encrypting any plaintext block data of the plaintext data N. Yet further the encryptor includes the selector 54 which selects the module output block data Tᵢ fed back by the feedback line 65 of the feedback loop to supply to the encrypting module 51 through the feedback loop when the plaintext block data Mᵢ is encrypted subsequent to the plaintext block data Mᵢ, and selects the module output block data Tᵢ stored in the memory 55 to supply to the encrypting module 51 through the feedback loop when the plaintext block data Mᵢ₊₁ is not encrypted subsequent to the plaintext block data Mᵢ but after any plaintext block data of the plaintext data N.

Fig. 17 explains the encryptor of the OFB mode shown in Fig. 16.

In Fig. 17, the operation of the CBC mode of Fig. 2 is changed to the operation of the OFB mode, and the other operations are the same to the one of Fig. 2.

Fig. 18 shows an encryptor of the CFB mode.

Compared with Fig. 47, the encryptor of Fig. 18 additionally includes the memory 55. The memory 55 stores ciphertext block data Cᵢ output from the XOR circuit 58.

Further, en encryption unit 52 is configured by the XOR circuit 58 and the encrypting module 51 using the encryption key K.

Fig. 18 shows an encryptor for encrypting plaintext block data Mᵢ (i = 1, 2, 3, ...) included in the plaintext data M and plaintext block data Nⱼ (j = 1, 2, 3, ...) included in the plaintext data N. The encryptor includes a processing mechanism of the interrupt that receives the request to encrypt the plaintext data N during the encryption of the plaintext data M before the completion of encrypting the plaintext data M and the encrypting unit 52 for encrypting the plaintext block data Mᵢ and outputting the ciphertext block data Cᵢ. The encryptor further includes feedback loops 65 and 66 for feeding back the ciphertext block data Cᵢ supplied from the encrypting unit 52 to the encrypting module through the feedback line 65, and the memory 55 provided in parallel with the feedback line 65 of the feedback loop, for receiving a request to encrypt the plaintext data N and storing the ciphertext block data Cᵢ fed back when the plaintext block data Mᵢ₊₁ is not encrypted subsequent to the plaintext block data Mᵢ because the encryptor starts a certain plaintext block data of the plaintext data N. Yet further, the encryptor includes the selector 54 which selects the ciphertext block data Cᵢ fed back by the feedback line 65 of the feedback loop to supply to the encrypting module 51 through the feedback loop when the plaintext block data Mᵢ is encrypted subsequent to the plaintext block data Mᵢ, and selects the ciphertext block data Cᵢ stored in the memory 55 to supply to the encrypting module 51 through the feedback loop when the plaintext block data Mᵢ₊₁ is not encrypted subsequent to the plaintext block data Mᵢ but after a certain plaintext block data of the plaintext data N.

Fig. 19 explains the encryptor of the OFB mode shown in Fig. 18.

In Fig. 19, the operation of the CBC mode of Fig. 2 is changed to the operation of the OFB mode, and the other operations are the same to the one of Fig. 2.

Fig. 20 shows a decryptor of the CBC mode.

Compared with Fig. 44, the decryptor of Fig. 20 additionally includes the memory 75.

The memory 75 includes a register 76 and a switch 77.

Further, a decrypting unit 72 is configured by an XOR circuit 78 and a decrypting module 71 using the key K.

A register 111 can be provided inside a selector 74.

The decryptor shown in Fig. 20, which decrypts the ciphertext block data Cᵢ (i = 1, 2, 3, ...) included in the ciphertext data C and the ciphertext block data Nⱼ (j = 1, 2, 3, ...) included in the ciphertext data D and includes a processing mechanism of the interrupt that receives a request to decrypt the ciphertext data D during decrypting process of the ciphertext data C.

Further, the decryptor shown in Fig. 20 further includes the decrypting module 71 for outputting decrypted data of the ciphertext block data Cᵢ as module output block data Tᵢ, feedback loops 85, 111, 82, and 86 for feeding back the ciphertext block data Cᵢ to the decrypting unit 72 through the feedback lines 85, 111, and 82 for decrypting ciphertext block data Cᵢ₊₁. The decryptor further includes the memory 75 provided in parallel with the feedback line 85, 111, 82, and 86 of the feedback loop and for receiving a request for decrypting the ciphertext data D and storing the block data fed back when the ciphertext block data Cᵢ₊₁ is not decrypted subsequent to the ciphertext block data Cᵢ because the decryptor starts decrypting any of ciphertext block data of the ciphertext data D.

Further, the decryptor shown in Fig. 20 includes the selector 74 which selects the ciphertext block data Cᵢ fed back by the feedback lines 85, 111, 82 of the feedback loop to supply to the encrypting unit 72 through the feedback loop when the ciphertext block data Cᵢ is encrypted subsequent to the ciphertext block data Cᵢ, and selects the ciphertext block data Cᵢ stored in the memory to supply to the encryption unit 72 through the feedback loop when the ciphertext block data Cᵢ₊₁ is not encrypted subsequent to the ciphertext block data Cᵢ but after any of ciphertext block data of the ciphertext data D.

"Feedback line" and "feedback loop" used in the above explanation of Fig. 20 do not mean "feedback" which "inputs data output from itself". Here, "feedback" means to supply ciphertext block data Cᵢ again for decrypting the ciphertext block data Cᵢ₊₁ after decrypting the ciphertext block data Cᵢ.

Fig. 21 shows an operation procedure of the decryptor shown in Fig. 20.

When the interrupt IT is generated during decrypting the ciphertext block data Cᵢ using the encryption key (also called decryption key) K₁, the ciphertext block data Cᵢ is stored in the register 76 of the memory 75. Thereafter, the ciphertext block data Dᵢ is decrypted using the encryption key (also called decryption key) K₂ into the plaintext block data N₁. Then, the ciphertext block data C₁ stored in the register 76 of the memory 75 is read, the ciphertext block data C₂ is decrypted into the plaintext block data M₂. The operation of the selector 74 is the same as one shown in Fig. 4. Further, the operation of the switch 77 is the same as one shown in Fig. 5.

Fig. 22 shows the decryptor of the OFB mode.

The decryptor shown in Fig. 22, which decrypts the ciphertext block data Cᵢ (i = 1, 2, 3, ...) included in the ciphertext data C and the ciphertext block data Dⱼ (j = 1, 2, 3, ...) included in the ciphertext data D, includes a processing mechanism of the interrupt that receives a request for decrypting the ciphertext data D during decrypting the ciphertext data C at an arbitrary timing point. The decryptor further includes the decrypting module 71 for outputting decrypted data as module output block data Tᵢ, feedback loops 85, 86 for feeding back the module output block data Tᵢ to the decrypting module 71 through the feedback lines 85. The decryptor further includes the memory 75 provided in parallel with the feedback line 85, of the feedback loop, and for receiving a request to decrypt the ciphertext data D and storing the module output block data Tᵢ fed back when the ciphertext block data Cᵢ₊₁ is not decrypted subsequent to the ciphertext block data Cᵢ because the decryptor starts decrypting any of ciphertext block data of the ciphertext data D. Further, the decryptor shown in Fig. 22 includes the selector 74 which selects the module output block data Tᵢ fed back by the feedback line 85 of the feedback loop to supply to the decrypting module 71 through the feedback loop when the ciphertext block data Cᵢ is encrypted subsequent to the ciphertext block data Cᵢ, and selects the module output block data Tᵢ stored in the memory 75 to supply to the decrypting module 71 through the feedback loop when the ciphertext block data Cᵢ₊₁ is not encrypted subsequent to the ciphertext block data Cᵢ but after any of ciphertext block data of the ciphertext data D.

Fig. 23 explains the operation of the decryptor of the OFB mode shown in Fig. 22.

The operation of Fig. 23 is the same with the one of the decryptor of the CBC mode shown Fig. 21 except that the operation is performed in OFB mode instead of the CBC mode.

Fig. 24 shows a decryptor of the CFB mode.

A decrypting unit 72 is configured by the XOR circuit 78 and a decrypting module 71.

Here, the register 111 can be provided inside the selector 74.

The decryptor shown in Fig. 24, which decrypts the ciphertext block data Cᵢ (i = 1, 2, 3, ...) included in the ciphertext data C and the ciphertext block data Dⱼ (j = 1, 2, 3, ...) included in the ciphertext data D, includes a processing mechanism of the interrupt that receives a request to decrypt the ciphertext data D during decrypting the ciphertext data C at an arbitrary timing point. The decryptor further includes the decrypting module 71 for outputting decrypted data as module output block data Tᵢ, feedback loops 85, 111, 82, 86 for feeding back the module output block data Tᵢ to the decrypting module 71 through the feedback lines 85, 111, 82. The decryptor further includes the memory 75 provided in parallel with the feedback line 85, 111, 82 of the feedback loop and for receiving a request to decrypt the ciphertext data D and storing the module output block data Tᵢ fed back when the ciphertext block data Cᵢ₊₁ is not decrypted subsequent to the ciphertext block data Cᵢ because the decryptor starts decrypting any of ciphertext block data of the ciphertext data D. Further, the decryptor shown in Fig. 24 includes the selector 74 which selects the module output block data Tᵢ fed back by the feedback line 85 of the feedback loop to supply to the decrypting module 71 through the feedback loop when the ciphertext block data Cᵢ is encrypted subsequent to the ciphertext block data Cᵢ, and selects the module output block data Tᵢ stored in the memory 75 to supply to the decrypting module 71 through the feedback loop when the ciphertext block data Cᵢ₊₁ is not encrypted subsequent to the ciphertext block data Cᵢ but after any of ciphertext block data of the ciphertext data D.

"Feedback line" and "feedback loop" used in the above explanation of Fig. 24 do not mean "feedback" which "inputs data output from itself". Here, "feedback" means to supply ciphertext block data Cᵢ again for decrypting the ciphertext block data Cᵢ₊₁ after decrypting the ciphertext block data.

Fig. 25 explains an operation of the decryptor of the CFB mode shown in Fig. 24.

In Fig. 25, the operation in the CBC mode shown in Fig. 21 is replaced with the operation in the CFB mode, and the other operations are the same as ones shown in Fig. 21.

Fig. 26 shows an improvement example of the encryptor of the CBC mode shown in Fig. 1.

A selector 154 and a memory 155 are added to the encryptor of Fig. 26. Fig. 1 shows a case in which the key K₁ is supplied from the outside if the interrupt IT is resolved, while the K₁ supplied from the outside is stored and used again here.

The memory 155 includes a register 156 and a switch 157. The switch 157 switches ignoring or inputting the encryption key K to the register 156. This switching is performed by, for example, the interrupt IT. When the interrupt IT is generated, the switch 157 is connected to E, and when the interrupt IT is resolved, the switch 157 is connected to F. The register 156 inputs the key K supplied through E and stores it. The key K stored in the register 156 is output to the selector 154. The selector 154 has two inputs of A and C, out of which the selector 154 selects one. This selection depends on the interrupt IT, which will be described later.

Fig. 27 shows an operation procedure of the encryptor shown in Fig. 26.

When the electric power of the encryptor is supplied, the inputs to the selector 54 and the selector 154 are set to A, and the switch 57 and the switch 157 are connected to E. Further, while a request to encrypt the plaintext data N exists, the interrupt IT is generated and kept ON until the request to encrypt the plaintext data N is resolved. Further, the plaintext data M is to be encrypted using the key K₁, and the plaintext data N is to be encrypted using the key K₂. The keys K₁ and K₂ are supplied to the encrypting module 51.

At time T0, the key K₁ is supplied from the outside as the key KI. As the switch 157 is connected to E, the key K₁ is stored in the register 156. Then, the encrypting process for the plaintext block data M₁ is started. When the plaintext block data M₁ is started at time T0, the selector 54 inputs an initial value IV through A, and then the selector 54 is switched to B. At time X during the encrypting process of the plaintext block data M₁ using the key K₁, it is assumed that the interrupt IT for requesting to encrypt the plaintext block data N₁. Until time T1, the ciphertext block data C₁ becomes stored in the memory 55. Then, the key K₂ is supplied to the encrypting module 51 from the outside as the key KI at time T1 due to the generation of the interrupt IT. At time T1, the input to the selector 54 is set to A. And at time T1, the switch 57 and the switch 157 are connected to F. Accordingly, the key K₂ is not stored in the register 156. After time T1, the encryption of the plaintext block data N₁ is performed using the key K₂, and the ciphertext block data D₁ is output. At time Y, the encryption of the plaintext block data N₁ is finished, and the interrupt IT is resolved. Due to this resolution of the interrupt IT, at time T2, the input to the selector 54 is switched to C, and the switch 57 is connected to E. Consequently, the key K₁ is output to the selector 154 from the register 156 as the key KL, and the key K₁ is supplied to the encrypting module 51 from the selector 154 as the key K₁. Further, as the selector 54 is switched to C, the ciphertext block data C₁ stored in the memory 55 is input for encrypting the plaintext block data M₂, the plaintext block data M₂ is encrypted by the encrypting module 51 using the key K₁, and the ciphertext block data C₂ is output. Before time T3, the input to the selector 54 is switched to B, and when the plaintext block data M₃ is encrypted, the ciphertext block data C₂ fed back from the feedback line 65 of the feedback loop is input, the plaintext block data M₃ is encrypted by the encrypting module 51 using the key K₁, and the ciphertext block data C₃ is output.

Further, before time T3, the input to the selector 154 is switched to A.

An operation of the selector 154 will be described.

When the electric power is turned ON, the input to the selector 154 is set to A. Further, also when the generation of the interrupt IT is detected, the input is kept setting to A. Until the interrupt IT is resolved, the selector 154 operates with setting its input to A. When the resolution of the interrupt IT is detected, the selector 154 sets the input to C. Due to setting the input to C, the key K₁ stored in the memory 55 is input to the encrypting module 51 as the key K. When the encryption using the key input from C is started, the selector sets the input to A.

As described above, the selector 154 can be switched based on the generation of the interrupt IT.

Next, an operation of processing the interrupt of the switch 157 will be explained.

When the electric power is turned ON, and at the first encrypting process of the plaintext data M, the switch 157 is connected to E, and the key K₁ for the plaintext M is stored in the register 156. And when the interrupt IT is generated at time X, the switch 157 is connected to F from E at time T₁, and the key K₂ for the plaintext N is ignored. Further, when the resolution of the interrupt IT is detected at time Y, the switch 157 is connected to E from F at time T2. In this way, the switch 157 ignores the key K₂ for the plaintext data N from the generation until the resolution of the interrupt IT. Accordingly, the key K₁ for the plaintext data M is kept storing in the register 156 of the memory 155.

Fig. 28 shows a configuration of the decryptor shown in Fig. 20 when the key K₁ is stored to be reused.

Fig. 28 shows a case in which a selector 174 and a memory 175 are added to the decryptor of Fig. 20. The operations of the selector 174 and the memory 175 are the same as the ones of the selector 154 and the memory 155 shown in Fig. 26.

The memory 55 and the memory 155 are examples of the memory for storing the status of the encryptor when the interrupt IT is generated. In this way, the status of the encrypting process is stored in the memory 55 and the memory 155, which enables the encryptor to return to the status of encrypting a certain data even when the encryption of another data is performed during the certain data is encrypted. Namely, using the data stored in the memory 55 and the key K stored in the memory 155, the status of the encryptor can be returned to the identical status when encryption is interrupted, and the interrupted encrypting process can be continued.

The memory 155 and the memory 175 can be configured as identically to the memory 55 shown in Figs. 6 and 8. Or, the key K₁ can be stored by adding the configuration such as ones shown in Figs. 26 and 28 to Figs. 16, 18, 22, and 24.

Further, since the memories 55 and 155 shown in Fig. 26 operate the same, these memories can be integrated into one memory.

As has been discussed, the decryptor in relation to the present embodiment performs decryption of the first processing data (ciphertext data C) including at least one block data Cᵢ (i = 1, 2, 3, ..., m) and the second processing data (ciphertext data D) including at least one block data Dⱼ (J = 1, 2, 3, ..., n). The decryptor includes the memory 75 storing the status of decrypting process. The decryptor starts decrypting process of an initial block data D₁ of the second processing data before the completion of the decrypting process of all block data (C₁ through Cₙ) of the first processing data. When the decryptor starts the decrypting process of the initial block data D₁ of the second processing data, the decryptor makes the above memory store the decrypting status of the first processing data, and when the decryptor restarts decrypting the first processing data, the status of the decryptor is returned to the decrypting status of the decryptor stored in the memory 75 and the decryptor restarts the decrypting process of the first processing data.

Further, the decryptor restarts the decrypting process of the first processing data before the completion of all block data (D₁ through Dₙ) of the second processing data, and the memory 74 stores the decrypting status of the second processing data when the decryptor restarts the decrypting process of the first processing data. When the decryptor restarts the decrypting process of the second processing data, the status of the decryptor is returned to the decrypting status of the second processing data stored in the memory and the decryptor restarts the decrypting process of the second processing data.

Here, the status of the encrypting process is, for example,
Encrypted block data Cᵢ (and the key K₁) in case of the CBC mode shown in Fig. 1,
Module output data Tᵢ (and the key K₁) in case of the OFB mode shown in Fig. 16, and
Encrypted block data Cᵢ (and the key K₁) in case of the CFB mode shown in Fig. 18. The decrypting status is, for example,
Encrypted block data Cᵢ (and the key K₁) in case of the CBC mode shown in Fig. 20,
Module output data Tᵢ (and the key K₁) in case of the OFB mode shown in Fig. 22, and
Encrypted block data Cᵢ (and the key K₁) in case of the CFB mode shown in Fig. 24.

In the above description, the encryptor and the decryptor have been explained in cases of three modes, respectively. The three modes are only examples, the present embodiment can be applied to the encryptor and the decryptor in other mode such as improved mode or transformed mode. In particular, the characteristics of the embodiment is that in the encrypting/decrypting method, in which the block data Cᵢ, Mᵢ, or Tᵢ generated at the encrypting/decrypting time of the previous data are used for the encrypting/decrypting process of the next block data Mᵢ₊₁ or Cᵢ₊₁ as the feedback data, the memory 55 is provided for storing the status of the encrypting/decrypting process, so that the status of the encryptor/decryptor can be returned back to the original status using the block data Cᵢ, Mᵢ, or Tᵢ after encrypting/decrypting process of another piece of data. Accordingly, which encrypting/decrypting mode is used is out of question.

Here, instead of the interrupt IT, the request for encryption using other mechanism such as poling system or token obtainment system can be received, and an interactive parallel processing of at least two encrypting/decrypting processes can be performed.

Further, in the above embodiment, the encryption key K is used for encrypting/decrypting process, however, the embodiment can be applied to the encrypting/decrypting process without using the encryption key.

### Embodiment 2.

In the following embodiment, another case will be explained, in which the encryptor performs a confidentiality process and a data integrity ensuring process.

The data confidentiality process means to encrypt data in order to make the data meaningless even when the data is wiretapped or stolen. Further, the data integrity ensuring process means to ensure that the data is not replaced by anybody. In case of transferring data, the integrity of data sometimes needs to be ensured as well as performing the confidentiality process of data. The data confidentiality process is performed by encrypting the data. The data integrity ensuring process is performed by appending a MAC (Message Authentication Code) to the last bit of the data and checking the MAC to detect the tempering.

Fig. 29 shows a case in which an encrypting unit 100 of the OFB mode performs the confidentiality process, and a MAC generator 200 of the CBC mode generates the MAC.

Fig. 29 shows the encryptor which encrypts the plaintext data including at least one plaintext block data using the encrypting module and generates the MAC for ensuring the integrity of the ciphertext data. The encryptor includes an encrypting unit 100 having a first feedback loop 65 which feeds back the module output block data Tᵢ supplied from the encrypting module 51 at encrypting the plaintext block data by the encrypting module 51 to the encrypting module 51. The encrypting unit 100 inputs the plaintext block data, feeds back module output block data Tᵢ using the first feedback loop 65 to perform the encrypting process to output ciphertext block data Cᵢ. The encryptor includes a MAC generator 200 having a second feedback loop 66 which feeds back a computed intermediate MAC result Tᵢ. The MAC generator 200 inputs the ciphertext block data Cᵢ at every output of the ciphertext block data Cᵢ from the encrypting unit 100, computes the MAC, makes the computed intermediate MAC result Tᵢ feedback using the second feedback loop 66, and generates a MAC P to ensure the integrity of the ciphertext data.

Fig. 30 shows an operation procedure of the encryptor shown in Fig. 29.

The plaintext block data M₁ is first encrypted into the ciphertext block data C₁. Next, the plaintext block data M₂ is input to be encrypted into the ciphertext block data C₂. Simultaneously to the encryption of the plaintext block data M₁, the ciphertext block data C₁ is input and the computation of the MAC is started. Between time T1 and time T2, the encrypting process of the plaintext block data M₂ and the computation of the MAC based on the ciphertext block data C₁ are performed. Between time T2 and time T3, the encrypting process of the plaintext block data M₃ and the computation of the MAC based on the ciphertext block data C₂ are performed. At time T3, the computation of the MAC based on the ciphertext block data C₃ is performed and the MAC P is output.

The configuration of Fig. 29 is characterized by that the ciphertext block data Cᵢ output from the XOR circuit 58 is input to the XOR circuit 59 by a feed line 69. The feed line 69 combines the encrypting processes of the OFB mode and the CBC mode, so that the confidentiality process and the integrity ensuring process are performed by pipeline processing. In case of Fig. 52, the process at time T6 requires much processing time, however, in case of Fig. 30, the processing is finished at time T4, which shows a high speed processing has been done.

Fig. 31 is a flow diagram showing the operation of the encryptor shown in Fig. 29.

At S51, a block data counter i is initialized to 1. S52 shows the operation of the encrypting unit 100. The encrypting unit 100 inputs the plaintext block data Mᵢ, encrypts the plaintext data Mᵢ into the ciphertext block data Cᵢ, and outputs the ciphertext block data Cᵢ. S53 shows the operation of the MAC generator 200. The MAC generator 200 inputs and encrypts the ciphertext block data Cᵢ and computes the MAC. S54 checks if the block data counter i indicates the last block data n. When the counter doesn't, the block data counter i is incremented at S55, and the operation is returned back to the process of S52. Namely, the processes of the encrypting unit 100 and the MAC generator 200 are repeated. When it is detected at S54 that the process of the last block data is completed, the last MAC computed at S53 becomes the final MAC, and the final MAC is appended to the last bit of the ciphertext block data Cᵢ at S56. As shown in Fig. 31, at every generation of the ciphertext block data Cᵢ by the encrypting unit 100, the MAC generator 200 inputs the ciphertext block data Cᵢ to compute the MAC, which enables the pipeline processing at a high speed.

Fig. 32 shows a configuration combining the encrypting unit 100 and the MAC generator 200 shown in Fig. 29. That is, the encrypting module 51 is shared by the encrypting unit 100 and the MAC generator 200, and the XOR circuit is used as the XOR circuit 58 of the encrypting unit 100 and the XOR circuit 59 of the MAC generator 200. Further, the feedback line is used as both the feedback line 65 of the encrypting unit 100 and the feedback line 66 of the MAC generator 200.

A first selector 61 selects an initial value IV at starting time of the confidentiality process. A second selector selects the initial value IV at the starting time of the integrity ensuring process. A third selector 63 alternately selects the confidentiality process and the integrity ensuring process. The confidentiality process can be performed by setting the input of the third selector to E. Further, the integrity ensuring process can be performed by setting the input of the third selector to F.

A memory 93 stores the module output data Tᵢ output from the encrypting module 51 using the encryption key K. The memory 93 includes an input switch 96, an output switch 97, a first register 98, and a second register 99. The input switch 96 and the output switch 97 are synchronized with switching the third selector 63. At every switching of the third selector 63, both the input switch 96 and the output switch 97 are switched.

Fig. 33 shows an operation procedure of the encryptor shown in Fig. 32.

Between time T0 and time T1, the confidentiality process of the plaintext block data M₁ is performed. The module output data generated during the confidentiality process is stored in the first register 98. Between time T1 and time T2, the MAC is computed based on the ciphertext block data C₁. The computed intermediate MAC result generated by the integrity ensuring process is stored in the second register 99. Next, between time T2 and time T3, the confidentiality process of the plaintext block data M₂ is performed based on the module output data stored in the first register 98 and the plaintext block data M₂. Then, between time T3 and time T4, the computed intermediate MAC result stored in the second register 99 and the ciphertext block data C₂ are input and the MAC is computed. By repeating these operations, the confidentiality process and the integrity ensuring process are completed and the ciphertext data and the MAC P are output. In case of Fig. 33, the process is finished at time T6 and the processing time is not reduced. However, as shown in Fig. 32, the encrypting module 51 using the encryption key K, the XOR circuit 58, and the feedback line 67, 68 (feedback loop) are shared by the encrypting unit and the MAC generator, so that the circuit scale can be reduced.

Fig. 34 shows a decryptor including a decrypting unit 300 of the OFB mode and a MAC generator 400 of the CBC mode.

The MAC generator 400 is configured the same as the MAC generator 200.

Fig. 34 shows the decryptor which decrypts the ciphertext data including at least one ciphertext block data into the plaintext data and generates the MAC for ensuring the integrity of the ciphertext data. The decryptor includes a decrypting unit 300 having a first feedback loop 65 which feeds back the module output block data Tᵢ generated at decrypting process of the ciphertext block data Cᵢ using the decrypting module 71. The decrypting unit 300 inputs the ciphertext block data Cᵢ makes the module output block data Tᵢ feedback by the first feedback loop 65 to decrypt and outputs the plaintext block data Mᵢ. The decryptor further includes a MAC generator 400 having a second feedback loop 66 which feeds back the computed intermediate MAC result Tᵢ. The MAC generator 400 inputs the same ciphertext block data with the ciphertext block data Cᵢ input to the decrypting unit 300, performs the MAC computation to output the computed intermediate MAC result, makes the second feedback loop 66 feedback the computed intermediate MAC result Tᵢ, and generates the MAC Q for ensuring the integrity of the ciphertext data.

The ciphertext block data Cᵢ is input to the XOR circuit 78 of the decrypting unit 300, and at the same time, the ciphertext block data Cᵢ is input to the MAC generator 400 by the feed line 69. By this configuration, the processes of the decrypting unit 300 and the MAC generator 400 are performed simultaneously, so that the processing speed can be increased.

Fig. 35 shows a configuration to which the decrypting unit 300 and the MAC generator 400 of the decryptor shown in Fig. 34 are integrated.

Fig. 35 shows a case in which the decrypting module 71 and the feedback lines 87, 88 (feedback loop) are shared.

A first selector 81 selects the initial value IV at starting time of the decrypting process. A second selector 82 selects the initial value IV at starting time of the integrity ensuring process. A third selector 83 alternately selects the decrypting process and the integrity ensuring process. The decryption can be performed by setting the input of the third selector 83 to E. Further, the integrity ensuring process can be performed by setting the input of the third selector 83 to F.

The memory 93 stores the module output data Tᵢ output from the encrypting module 51 using the encryption key K. The memory 93 includes an input switch 96, an output switch 97, a first register 98, and a second register 99. The input switch 96 and the output switch 97 are synchronized to switching of the third selector 83. At every switching of the third selector 83, the input switch 96 and the output switch 97 are also switched.

Fig. 36 shows an operation procedure of the decryptor shown in Fig. 35.

The decryptor inputs the ciphertext data and the MAC P.

Between time T0 and time T1, the ciphertext block data Cᵢ is decrypted and the ciphertext block data Cᵢ is stored in the register 111. The module output data generated during the decrypting process is stored in the register 98. Between time T1 and time T2, the MAC is computed based on the ciphertext block data Cᵢ stored in the register 111. The computed intermediate MAC result generated during the integrity ensuring process is stored in the second register 99. Next, between time T2 and time T3, the ciphertext block data C₂ is stored in the register 111, the decrypting process of the plaintext block data M₂ is performed based on the module output data stored in the first register 98 and the ciphertext block data C₂. Then, between time T3 and time T4, the computed intermediate MAC result stored in the second register 99 and the ciphertext block data C₂ stored in the register 111 are input and the MAC is computed. By repeating these operations, the plaintext data and the MAC Q are output. The MAC Q is compared with the MAC P. If the MAC P matches the MAC Q, the integrity of the data can be ensured. Thus, the decrypting process and the integrity ensuring process are completed.

Fig. 37 shows a configuration in which the encrypting unit 100 of the CBC mode is used instead of the encrypting unit 100 of the OFB mode shown in Fig. 29.

Fig. 37 shows the encryptor which encrypts the plaintext data including at least one plaintext block data using the encrypting module and generates the MAC for ensuring the integrity of the ciphertext data. The encryptor includes an encrypting unit 100 having a first feedback loop 65 which feeds back the ciphertext block data Cᵢ output from the encrypting module 51 at encrypting time of the plaintext block data by the encrypting unit 52. The encrypting unit 100 inputs the plaintext block data Mᵢ, makes the ciphertext block data Cᵢ feedback using the first feedback loop 65 to perform the encrypting process, and outputs the ciphertext block data Cᵢ. The encryptor further includes a MAC generator 200 having a second feedback loop 66 which feeds back a computed intermediate MAC result Tᵢ. The MAC generator 200 inputs the ciphertext block data Cᵢ at every output of the ciphertext block data Cᵢ from the encrypting unit 100, computes the MAC, makes the computed intermediate MAC result Tᵢ feedback using the second feedback loop 66, and generates a MAC P to ensure the integrity of the ciphertext data.

Fig. 38 shows a configuration in which the decrypting unit 300 of the CBC mode is provided instead of the decrypting unit 300 of the OFB mode shown in Fig. 34.

Fig. 38 shows the decryptor which decrypts the ciphertext data including at least one ciphertext block data into the plaintext data and generates the MAC for ensuring the integrity of the ciphertext data. The decryptor includes a decrypting unit 300 having a first feedback loops 85, 82 for feeding back the ciphertext block data Cᵢ, and the decrypting unit 300 inputs the ciphertext block data Cᵢ and makes the ciphertext block data Cᵢ feedback by the first feedback loops 85, 82 to decrypt, and outputs the plaintext block data Mᵢ. The decryptor further includes a MAC generator 400 having a second feedback loop 66 for feeding back the computed intermediate MAC result Tᵢ, and the MAC generator 400 inputs the ciphertext block data Cᵢ being identical to the ciphertext block data Cᵢ input to the decrypting unit 300, computes the MAC, outputs the computed intermediate MAC result Tᵢ, makes the computed intermediate MAC result Tᵢ feedback by the second feedback loop, and generates the MAC for ensuring the integrity of the ciphertext data.

As described above, Figs. 29 and 37 show the encryptors, each of which includes the encrypting unit inputting data to encrypt and outputting the data and the MAC generator inputting the encrypted data output from the encrypting unit and generating the MAC for ensuring the integrity of the ciphertext data, wherein the MAC generator starts generating the MAC before the encryption of the data is completed by the encrypting unit.

Further, Figs. 34 and 38 show the decryptors, each of which includes the decrypting unit inputting the data to decrypt and outputting the data and the MAC generator inputting the data input by the decrypting unit and generating the MAC for ensuring the integrity of the ciphertext data, wherein the MAC generator starts generating the MAC before the decryption of the data is completed by the decrypting unit.

The encrypting unit 100 or the decrypting unit 300 of the OFB mode, which are not shown in the figures, can be used in the above encryptor/decryptor.

The MAC generator 200 of the OFB mode or the CFB mode, which are not shown in the figures, can be used in the above encryptor/decryptor.

Fig. 39 shows a configuration of the encrypting module 51 or the decrypting module 71.

The encrypting module 51 includes a key scheduler 511 and a data randomizer 512. The key scheduler 511 inputs one key K to generate n number of extended keys ExtK₁ through ExtKₙ. The data randomizer 512 generates a random number using a function F and an XOR circuit. The function F inputs the extended key and performs non-linear transformation of the data.

In the encrypting module 51 of the above encryptor, the block cipher algorithm such as:
(1) DES (Data Encryption Standard),
(2) MISTY, the block cipher algorithm disclosed by the International Patent Publication No. WO97/9705 (US Patent application No. 08/83640),
(3) KASUMI, 64-bit block cipher developed based on the block cipher algorithm MISTY, which was determined to be applied to the International standard cipher for next generation cellular phone (IMT2000) (more in detail, please visit http://www.3gpp.org/About_3GPP/3gpp.htm), or
(4) Camellia, the block cipher algorithm disclosed in the Japanese patent application No. 2000-64614 (filed on March 9, 2000). Further, in the decrypting module of the decryptor, the block cipher algorithm such as DES, MISTY, KASUMI, or Camellia can be applied.

Fig. 40 shows an implementation form of the encryptor or the decryptor.

Fig. 40 shows a case in which the encryptor and the decryptor are installed in FPGA, IC, or LSI. Namely, the above-mentioned encryptor and decryptor can be implemented by the hardware. Further, the encryptor and the decryptor can be implemented by a printed circuit board, which is not shown in the figure.

Fig. 41 shows a case in which the encryptor and the decryptor are implemented by the software.

The above encryptor can be implemented by a cipher program 47. The cipher program 47 is stored in ROM (Read Only Memory) 42 (an example of the storage). The cipher program 47 can be stored in other kind of storage such as RAM (Random Access Memory), a flexible disk, or a fixed disk. Further, the cipher program 47 can be downloaded from a server computer. The cipher program 47 operates as a sub-routine. The cipher program 47 is called from an application program 46 stored in the RAM 45 by a sub-routine call and the cipher program 47 is executed. Or, the cipher program 47 can be activated by generation of an interrupt received by the interrupt control unit 43. The memory 55 can be a part of the RAM 45. The application program 46 and the cipher program 47 are programs executed by the CPU.

Fig. 42 shows a mechanism by which the application program 46 calls the cipher program 47.

The application program 46 calls the cipher program 47 using the key K, the initial value IV, the plaintext data M, and the ciphertext data C as parameters. The cipher program 47 inputs the key K, the initial value IV, and the plaintext data M and returns the ciphertext data C. When the cipher program 47 and the decipher program are the same, the cipher program is called using the key K, the initial value IV, the ciphertext data C, and the plaintext data M as parameters.

The cipher program 47 can be implemented by a digital signal processor and a program which is read and executed by the digital signal processor. Namely, the cipher program 47 can be implemented by the combination of the hardware and the software.

Figs. 40, 41, and 42 mainly explain cases for the encryptor, however, the decryptor can be implemented in the same manner.

The encryptor and the decryptor shown in Figs. 40 and 41 can be installed in an electronic device. For example, the encryptor and the decryptor can be installed in all kinds of the electronic devices such as a personal computer, a facsimile machine, a cellular phone, a video camera, a digital camera, a TV camera. In particular, the characteristics of the present embodiment can be effectively drawn in case of encrypting/decrypting the data from plural channels. Or the application of the embodiment is effective when plural pieces of data are received from plural users to be decrypted, when plural pieces of data are generated from plural users at random and the data should be encrypted in real time. Namely, the encryptor and the decryptor of the embodiment are really effective when the number of the devices for encrypting/decrypting is small compared with the number of pieces of data to be encrypted/decrypted. For example, the encryptor and the decryptor are very effective for the server computer which requires to support many client computers, a base station or a line controller which requires to collect data from lots of cellular phones.

Instead of parallel processing of encrypting processes and decrypting processes, the encrypting process and the decrypting process can be performed in parallel.

Further, the above explanation shows a case of the combination of the encrypting unit (or the decrypting unit) of the OFB mode and the MAC generator of the CBC mode, however, any combination of modes can be used such as the OFB mode, the CBC mode, the CFB mode, improved mode of these modes, and so on.

Further, the above explanation shows a case in which the MAC generator performs encryption using the encryption key K, however, the MAC generator can perform the data scrambling, the data calculation, or other data processing.

### Industrial applicability

As has been described, according to the preferred embodiment of the present invention, the encrypting process of the plaintext data N can be started during the encrypting process of the plaintext data M. Further, the decrypting process of the ciphertext data D can be started during the decrypting process of the ciphertext data C.

Further, according to the preferred embodiment of the present invention, priorities can be assigned to the data to be encrypted/decrypted, a high speed processing can be performed based on the priorities of the data.

Yet further, according to the preferred embodiment of the present invention, the confidentiality process and the integrity ensuring process can be performed in parallel, which enables a high speed processing. Further, the confidentiality process and the integrity ensuring process can be performed by one integrated hardware.

## Claims

1. An encrypting apparatus comprising:
an encrypting unit (100) for inputting data to encrypt and outputting encrypted data, and
a message authentication code (MAC) generator (200) for inputting the encrypted data output from the encrypting unit and generating a MAC for ensuring an integrity of the encrypted data,
wherein the MAC generator starts generating the MAC before completion of encrypting the data by the encrypting unit and wherein plaintext data including at least one plaintext block data is encrypted into ciphertext data using the encrypting unit and a message authentication code (MAC) is generated to ensure an integrity of the ciphertext data,
wherein the encrypting unit (100) has a first feedback loop for feeding back ciphertext block data Cᵢ output by the encrypting unit (100) to the encrypting unit (100) when the plaintext block data is encrypted by the encrypting unit (100), for inputting the plaintext data, performing an encrypting process by feeding back the ciphertext block data Cᵢ through the first feedback loop, and outputting the ciphertext block data Cᵢ,
wherein the encrypting apparatus further comprises a feed line (69) for inputting the ciphertext block data Cᵢ from the encrypting unit (100) and outputting the ciphertext block data Cᵢ to the message authentication code (MAC) generator (200), and
wherein the message authentication code (MAC) generator (200) has a second feedback loop for feeding back a computed intermediate MAC result Tᵢ, for inputting the ciphertext block data Cᵢ from the feed line (69), computing an intermediate MAC result based on the ciphertext block data Cᵢ inputted, feeding back the intermediate MAC result as the computed intermediate MAC result Tᵢ by the second feedback loop, and generating the MAC to ensure the integrity of the ciphertext data,
***characterised in that***
the encrypting unit and the MAC generator perform alternately the encrypting process and a MAC generating process by sharing one encrypting module and one feedback loop (67, 68), wherein the one feedback loop (67, 68) includes:
a memory for respectively storing and outputting results of the encrypting process and the MAC generating process, and
a selector for selecting alternately the results of the encrypting process and the MAC generating process from the memory to alternately perform the encrypting process and the MAC generating process.

2. An encrypting apparatus comprising:
an encrypting unit (100) for inputting data to encrypt and outputting encrypted data, and
a message authentication code (MAC) generator (200) for inputting the encrypted data output from the encrypting unit and generating a MAC for ensuring an integrity of the encrypted data,
wherein the MAC generator starts generating the MAC before completion of encrypting the data by the encrypting unit and wherein plaintext data including at least one plaintext block data is encrypted and a message authentication code (MAC) is generated for ensuring an integrity of ciphertext data,
wherein the encrypting unit (100) has a first feedback loop for feeding back module output block data Tᵢ output from the encrypting module (51) of the encrypting unit (100) to the encrypting module (51) when the plaintext block data is encrypted by the encrypting unit (100), for inputting the plaintext data, performing encrypting process by feeding back the module output block data Tᵢ through the first feedback loop, and outputting the ciphertext block data,
wherein the encrypting apparatus further comprises a feed line (69) for inputting the ciphertext block data from the encrypting unit (100) and outputting the ciphertext block data to the message authentication code (MAC) generator (200), and
wherein the MAC generator (200) has a second feedback loop for feeding back a computed intermediate MAC result, for inputting the ciphertext block data from the feed line (69), computing an intermediate MAC result based on the ciphertext block data inputted, feeding back the intermediate MAC result as the computed intermediate MAC result through the second feedback loop, and generating the MAC to ensure the integrity of the ciphertext data,
***characterized in that***
the encrypting unit and the MAC generator share one encrypting module and one feedback loop (67, 68) to perform alternately the encrypting process and a MAC generating process, wherein the one feedback loop includes:
a memory for respectively storing and outputting results of the encrypting process and the MAC generating process, and
a selector for selecting alternately the results of the encrypting process and the MAC generating process from the memory to alternately perform the encrypting process and the MAC generating process.

3. An encrypting method comprising:
an encrypting step for inputting data to encrypt and outputting encrypted data, and
a MAC generating step for inputting the encrypted data output from the encrypting step and generating a MAC for ensuring an integrity of the encrypted data,
wherein the MAC generating step starts generating the MAC before completion of encrypting the data by the encrypting step and wherein plaintext data including at least one plaintext block data is encrypted into ciphertext data using an encrypting unit and a message authentication code (MAC) is generated to ensure an integrity of the ciphertext data,
wherein the encrypting step includes a first feedback step for feeding back ciphertext block data Cᵢ output from the encrypting unit when the encrypting unit encrypts plaintext block data, inputting the plaintext block data, performing an encrypting process by feeding back the ci-phertext block data Cᵢ through a first feedback loop, and outputting the ciphertext block data Cᵢ,
wherein the ciphertext block data Cᵢ output by the encrypting step is fed, by a feeding step, to the MAC generating step, and
wherein the MAC generating step includes a second feedback step for feeding back a computed intermediate MAC result, inputting the ciphertext block data Cᵢ from the feeding step, computing an intermediate MAC result based on the ciphertext block data Cᵢ inputted, feeding back the intermediate MAC result as the computed intermediate MAC result through the second feedback step, and generating the MAC to ensure the integrity of the ciphertext data,
***characterized in that***
the encrypting step and the MAC generating step perform alternately the encrypting process and a MAC generating process by sharing one encrypting module and one feedback loop, wherein the one feedback loop includes:
a memory for respectively storing and outputting results of the encrypting process and the MAC generating process, and
a selector for selecting alternately the results of the encrypting process and the MAC generating process from the memory to alternately perform the encrypting process and the MAC generating process.

4. An encrypting method comprising:
an encrypting step for inputting data to encrypt and outputting encrypted data, and
a MAC generating step for inputting the encrypted data output from the encrypting step and generating a MAC for ensuring an integrity of the encrypted data,
wherein the MAC generating step starts generating the MAC before completion of encrypting the data by the encrypting step and wherein plaintext data including at least one plaintext block data is encrypted into ciphertext data using an encrypting unit and a message authentication code (MAC) is generated to ensure an integrity of the ciphertext data,
wherein the encrypting step has a first feedback step for feeding back module output block data Tᵢ output from an encrypting module when the plaintext block data is encrypted, for inputting the plaintext block data, performing an encrypting process by feeding back the module output block data Tᵢ through a first feedback loop, and outputting ciphertext block data,
wherein the ciphertext block data output by the encrypting step is fed, by a feeding step, to the MAC generating step, and
wherein the MAC generating step has a second feedback step for feeding back a computed intermediate MAC result, for inputting the ciphertext block data from the feeding step, computing an intermediate MAC result based on the ciphertext block data inputted, feeding back the intermediate MAC result as the computed intermediate MAC result through the second feedback step, and generating the MAC to ensure the integrity of the ciphertext data,
***characterized in that***
the encrypting step and the MAC generating step share one encrypting module and one feedback loop to perform alternately the encrypting process and a MAC generating process, wherein the one feedback loop includes:
a memory for respectively storing and outputting results of the encrypting process and the MAC generating process, and
a selector for selecting alternately the results of the encrypting process and the MAC generating process from the memory to alternately perform the encrypting process and the MAC generating process.

5. A decrypting apparatus comprising:
a decrypting unit (300) for inputting data to decrypt and outputting decrypted data, and
a message authentication code (MAC) generator (400) for inputting the decrypted data output from the decrypting unit and generating a MAC for ensuring an integrity of encrypted data,
wherein the MAC generator starts generating the MAC before completion of decrypting the data by the decrypting unit and wherein ciphertext data including at least one ciphertext block data is decrypted into plaintext data and a message authentication code (MAC) is generated for ensuring an integrity of ciphertext data,
wherein the decrypting unit (300) includes a first feedback loop for feeding back module output block data generated at decrypting data by a decrypting module, for inputting the ciphertext block data Cᵢ, decrypting the ciphertext block data Cᵢ using the module output block data fed back through the first feedback loop, and outputting plaintext block data Mᵢ,
wherein the decrypting apparatus further comprises a feed line (69) for inputting the ci-phertext block data Cᵢ being inputted to the decrypting unit (300) and outputting the ciphertext block data Cᵢ to the message authentication code (MAC) generator (400), and
wherein the MAC generator (400) includes a second feedback loop for feeding back a computed intermediate MAC result Tᵢ, for inputting the ciphertext block data Cᵢ from the feed line (69), computing an intermediate MAC result based on the ciphertext block data Cᵢ inputted, outputting the intermediate MAC result as the computed intermediate MAC result Tᵢ, feeding back the computed intermediate MAC result Tᵢ through the second feedback loop, and generating the MAC for ensuring the integrity of ciphertext data,
***characterized in that***
the decrypting unit and the MAC generator share one decrypting module and one feedback loop and alternately perform a decrypting process and a MAC generating process, wherein the one feedback loop includes:
a memory storing and outputting results of the decrypting process and the MAC generating process, and
a selector for alternately selecting the results of the decrypting process and the MAC generating process to output to the decrypting module for alternately performing the decrypting process and the MAC generating process.

6. A decrypting apparatus comprising:
a decrypting unit (300) for inputting data to decrypt and outputting decrypted data, and
a message authentication code (MAC) generator (400) for inputting the data to decrypt and generating a MAC for ensuring an integrity of encrypted data,
wherein the MAC generator starts generating the MAC before completion of decrypting the data by the decrypting unit and wherein ciphertext data including at least one ciphertext block data is decrypted into plaintext data using a decrypting module and a message authentication code (MAC) is generated to ensure an integrity of the ci-phertext data,
wherein decrypting unit (300) has a first feedback loop for feeding back ciphertext block data Cᵢ, for inputting the ciphertext block data, performing a decrypting process by feeding back the ciphertext block data Cᵢ through the first feedback loop, and outputting plaintext block data,
wherein the decrypting apparatus further comprises a feed line (69) for inputting the ci-phertext block data being inputted to the decrypting unit (300) and outputting the ciphertext block data to the message authentication code (MAC) generator (400), and
wherein the message authentication code (MAC) generator (400) has a second feedback loop for feeding back a computed intermediate MAC result, for inputting the ciphertext block data from the feed line (69), computing an intermediate MAC result based on the ciphertext block data inputted, outputting the intermediate MAC result as the computed intermediate MAC result, feeding back the computed intermediate MAC result through the second feedback loop, and generating the MAC to ensure the integrity of the ciphertext data
***characterized in that***
the decrypting unit and the MAC generator share one decrypting module and one feedback loop to perform alternately the decrypting process and a MAC generating process, wherein the one feedback loop includes:
a memory for respectively storing and outputting results of the decrypting process and the MAC generating process, and
a selector for selecting alternately the results of the decrypting process and the MAC generating process from the memory to alternately perform the decrypting process and the MAC generating process.

7. A decrypting method comprising:
a decrypting step for inputting data to decrypt and outputting decrypted data, and
a MAC generating step for inputting the decrypted data output from the decrypting step and generating a MAC for ensuring an integrity of the encrypted data,
wherein the MAC generating step starts generating the MAC before completion of decrypting the data by the decrypting step and wherein ciphertext data including at least one ciphertext block data is decrypted into plaintext data and a message authentication code (MAC) is generated for ensuring an integrity of the ciphertext data,
wherein the decrypting step includes a first feedback step for feeding back module output block data generated at decrypting data by a decrypting module, inputting the ciphertext block data Cᵢ, decrypting the ciphertext block data Cᵢ using the module output block data fed back through a first feedback loop, and outputting plaintext block data Mᵢ,
wherein the ciphertext block data Cᵢ being inputted to the decrypting step is fed, by a feeding step, to the MAC generating step, and
wherein the MAC generating step includes a second feedback step for feeding back a computed intermediate MAC result Tᵢ, inputting the ciphertext block data Cᵢ from the feeding step, computing an intermediate MAC result based on the ciphertext block data Cᵢ inputted, outputting the intermediate MAC result as the computed intermediate MAC result Tᵢ, feeding back the computed intermediate MAC result Tᵢ by a second feedback loop, and generating the MAC for ensuring the integrity of ciphertext data,
***characterized in that***
the decrypting step and the MAC generating step share one decrypting module and one feedback loop and alternately perform a decrypting process and a MAC generating process, wherein the one feedback loop includes:
a memory storing and outputting results of the decrypting process and the MAC generating process, and
a selector for alternately selecting the results of the decrypting process and the MAC generating process to output to the decrypting module for alternately performing the decrypting process and the MAC generating process.

8. A decrypting method comprising:
a decrypting step for inputting data to decrypt and outputting decrypted data, and
a MAC generating step for inputting the data to decrypt and generating a MAC for ensuring an integrity of the encrypted data,
wherein the MAC generating step starts generating the MAC before completion of decrypting the data by the decrypting step and wherein ciphertext data including at least one ciphertext block data is decrypted into plaintext data using a decrypting unit and a message authentication code (MAC) is generated to ensure an integrity of the ciphertext data,
wherein the decrypting step has a first feedback step for feeding back ciphertext block data Cᵢ, for inputting the ciphertext block data, performing a decrypting process of the ciphertext block data Cᵢ fed back through a first feedback loop, and outputting plaintext block data,
wherein the ciphertext block data being inputted to the decrypting step is fed, by a feeding step, to the MAC generating step, and
wherein the MAC generating step has a second feedback step for feeding back a computed intermediate MAC result, inputting the ciphertext block data Cᵢ from the feeding step, computing an intermediate MAC result based on the ciphertext block data Cᵢ inputted, outputting the intermediate MAC result as the computed intermediate MAC result, feeding back the computed intermediate MAC result through the second feedback step, and generating the MAC to ensure the integrity of the ciphertext data
***characterized in that***
the decrypting step and the MAC generating step share one decrypting module and one feedback loop to perform alternately the decrypting process and a MAC generating process, wherein the one feedback loop includes:
a memory for respectively storing and outputting results of the decrypting process and the MAC generating process, and
a selector for selecting alternately the results of the decrypting process and the MAC generating process from the memory to alternately perform the decrypting process and the MAC generating process.

9. A computer readable storage medium storing a program for having a computer execute steps for the encrypting method described in one of claims 3 to 4.

10. A computer readable storage medium storing a program for having a computer execute steps for the decrypting method described in one of claims 7 to 8.

## Patentansprüche

1. Verschlüsselungs-Vorrichtung aufweisend:
eine Verschlüsselungs-Einheit (100) zum Eingeben von zu verschlüsselnden Daten und zum Ausgeben von verschlüsselten Daten, und
ein Mitteilungs-Authentifikations-Code- (MAC-) -Generator (200) zum Eingeben der von der Verschlüsselungs-Einheit ausgegebenen verschlüsselten Daten und Erzeugen eines MAC zum Gewährleisten einer Integrität der verschlüsselten Daten,
wobei der MAC-Generator vor Abschluss des Verschlüsselns der Daten durch die Verschlüsselungs-Einheit beginnt, den MAC zu erzeugen, und wobei Klartext-Daten, die wenigstens einen Klartext-Block Daten enthalten, unter Verwendung der Verschlüsselungs-Einheit in Chiffretext-Daten verschlüsselt werden, und ein Mitteilungs-Authentifikations-Code (MAC) erzeugt wird, um eine Integrität der Chiffretext-Daten zu gewährleisten,
wobei die Verschlüsselungs-Einheit (100) eine erste Rückkopplungs-Schleife aufweist zum Rückkoppeln von Chiffretext-Block-Daten Cᵢ, die von der Verschlüsselungs-Einheit (100) ausgegeben werden, an die Verschlüsselungs-Einheit (100), wenn die Klartext-Block-Daten durch die Verschlüsselungs-Einheit (100) verschlüsselt werden, zum Eingeben der Klartext-Daten, Durchführen eines Verschlüsselungs-Prozesses durch Rückkoppeln der Chiffretext-Block-Daten Cᵢ durch die erste Rückkopplungs-Schleife, und Ausgeben der Chiffretext-Block-Daten Cᵢ,
wobei die Verschlüsselungs-Vorrichtung ferner eine Zuleitung (69) zum Eingeben der Chiffretext-Block-Daten Cᵢ von der Verschlüsselungs-Einheit (100) und Ausgeben der Chiffretext-Block-Daten Cᵢ an den Mitteilungs-Authentifikations-Code- (MAC-) -Generator (200) aufweist, und
wobei der Mitteilungs-Authentifikations-Code- (MAC-) -Generator (200) eine zweite Rückkopplungs-Schleife aufweist zum Rückkoppeln eines berechneten zwischenstuflichen MAC-Ergebnisses Tᵢ, zum Eingeben der Chiffretext-Block-Daten Cᵢ von der Zuleitung (69), Berechnen eines zwischenstuflichen MAC-Ergebnisses auf Grundlage der eingegebenen Chiffretext-Block-Daten Cᵢ, Rückkoppeln des zwischenstuflichen MAC-Ergebnisses als das berechnete zwischenstufliche MAC-Ergebnis Tᵢ durch die zweite Rückkopplungs-Schleife, und Erzeugen des MAC,
um die Integrität der Chiffretext-Daten zu gewährleisten,
**dadurch gekennzeichnet, dass**
die Verschlüsselungs-Einheit und der MAC-Generator alternierend den Verschlüsselungs-Prozess und einen MAC-Erzeugungs-Prozess durch Teilen eines Verschlüsselungs-Moduls und einer Rückkopplungs-Schleife (67, 68) durchführen, wobei die eine Rückkopplungs-Schleife (67, 68) enthält:
einen Speicher zum jeweiligen Speichern und Ausgeben von Ergebnissen des Verschlüsselungs-Prozesses und des MAC-Erzeugungs-Prozesses, und
einen Selektor zum alternierenden Auswählen der Ergebnisse des Verschlüsselungs-Prozesses und des MAC-Erzeugungs-Prozesses von dem Speicher, um alternierend den Verschlüsselungs-Prozess und den MAC-Erzeugungs-Prozess durchzuführen.

2. Verschlüsselungs-Vorrichtung aufweisend:
eine Verschlüsselungs-Einheit (100) zum Eingeben von zu verschlüsselnden Daten und zum Ausgeben von verschlüsselten Daten, und ein Mitteilungs-Authentifikations-Code- (MAC-) -Generator (200) zum Eingeben der von der Verschlüsselungs-Einheit ausgegebenen verschlüsselten Daten und Erzeugen eines MAC zum Gewährleisten einer Integrität der verschlüsselten Daten,
wobei der MAC-Generator vor Abschluss des Verschlüsselns der Daten durch die Verschlüsselungs-Einheit beginnt, den MAC zu erzeugen, und wobei Klartext-Daten, die wenigstens einen Klartext-Block Daten enthalten, verschlüsselt werden, und ein Mitteilungs-Authentifikations-Code (MAC) zum Gewährleisten einer Integrität der Chiffretext-Daten erzeugt wird,
wobei die Verschlüsselungs-Einheit (100) eine erste Rückkopplungs-Schleife aufweist zum Rückkoppeln von Modul-Ausgabe-Block-Daten Tᵢ, die von dem Verschlüsselungs-Modul (51) der Verschlüsselungs-Einheit (100) ausgegebenen werden, an das Verschlüsselungs-Modul (51), wenn die Klartext-Block-Daten durch die Verschlüsselungs-Einheit (100) verschlüsselt werden, zum Eingeben der Klartext-Daten, Durchführen eines Verschlüsselungs-Prozesses durch Rückkoppeln der Modul-Ausgabe-Block-Daten Tᵢ durch die erste Rückkopplungs-Schleife, und Ausgeben der Chiffretext-Block-Daten,
wobei die Verschlüsselungs-Vorrichtung ferner eine Zuleitung (69) zum Eingeben der Chiffretext-Block-Daten von der Verschlüsselungs-Einheit (100) und Ausgeben der Chiffretext-Block-Daten an den Mitteilungs-Authentifikations-Code- (MAC-) -Generator (200) aufweist, und
wobei der MAC-Generator (200) eine zweite Rückkopplungs-Schleife aufweist zum Rückkoppeln eines berechneten zwischenstuflichen MAC-Ergebnisses, zum Eingeben der Chiffretext-Block-Daten von der Zuleitung (69), Berechnen eines zwischenstuflichen MAC-Ergebnisses auf Grundlage der eingegebenen Chiffretext-Block-Daten, Rückkoppeln des zwischenstuflichen MAC-Ergebnisses als das berechnete zwischenstufliche MAC-Ergebnis durch die zweite Rückkopplungs-Schleife, und Erzeugen des MAC, um die Integrität der Chiffretext-Daten zu gewährleisten,
**dadurch gekennzeichnet, dass**
die Verschlüsselungs-Einheit und der MAC-Generator ein Verschlüsselungs-Modul und eine Rückkopplungs-Schleife (67, 68) teilen, um alternierend den Verschlüsselungs-Prozess und einen MAC-Erzeugungs-Prozess durchzuführen, wobei die eine Rückkopplungs-Schleife enthält:
einen Speicher zum jeweiligen Speichern und Ausgeben von Ergebnissen des Verschlüsselungs-Prozesses und des MAC-Erzeugungs-Prozesses, und
einen Selektor zum alternierenden Auswählen der Ergebnisse des Verschlüsselungs-Prozesses und des MAC-Erzeugungs-Prozesses von dem Speicher, um alternierend den Verschlüsselungs-Prozess und den MAC-Erzeugungs-Prozess durchzuführen.

3. Verschlüsselungs-Verfahren aufweisend:
einen Verschlüsselungs-Schritt zum Eingeben von zu verschlüsselnden Daten und zum Ausgeben von verschlüsselten Daten, und
einen MAC-Erzeugungs-Schritt zum Eingeben der von dem Verschlüsselungs-Schritt ausgegebenen verschlüsselten Daten und Erzeugen eines MAC zum Gewährleisten einer Integrität der verschlüsselten Daten,
wobei der MAC-Erzeugungs-Schritt vor Abschluss des Verschlüsselns der Daten durch den Verschlüsselungs-Schritt beginnt, den MAC zu erzeugen, und wobei Klartext-Daten, die wenigstens einen Klartext-Block Daten enthalten, unter Verwendung einer Verschlüsselungs-Einheit in Chiffretext-Daten verschlüsselt werden, und ein Mitteilungs-Authentifikations-Code (MAC) erzeugt wird, um eine Integrität der Chiffretext-Daten zu gewährleisten,
wobei der Verschlüsselungs-Schritt einen ersten Rückkopplungs-Schritt enthält zum Rückkoppeln von Chiffretext-Block-Daten Cᵢ, die von der Verschlüsselungs-Einheit ausgegeben werden, wenn die Verschlüsselungs-Einheit Klartext-Block-Daten verschlüsselt, zum Eingeben der Klartext-Block-Daten, Durchführen eines Verschlüsselungs-Prozesses durch Rückkoppeln der Chiffretext-Block-Daten Cᵢ durch eine erste Rückkopplungs-Schleife, und Ausgeben der Chiffretext-Block-Daten Cᵢ,
wobei die von dem Verschlüsselungs-Schritt ausgegebenen Chiffretext-Block-Daten Cᵢ durch einen Zuführungs-Schritt dem MAC-Erzeugungs-Schritt zugeführt werden, und
wobei der Mitteilungs-Authentifikations-Code- (MAC-) -Erzeugungs-Schritt einen zweiten Rückkopplungs-Schritt enthält zum Rückkoppeln eines berechneten zwischenstuflichen MAC-Ergebnisses, Eingeben der Chiffretext-Block-Daten Cᵢ von dem Zuführungs-Schritt, Berechnen eines zwischenstuflichen MAC-Ergebnisses auf Grundlage der eingegebenen Chiffretext-Block-Daten Cᵢ, Rückkoppeln des zwischenstuflichen MAC-Ergebnisses als das berechnete zwischenstufliche MAC-Ergebnis durch den zweiten Rückkopplungs-Schritt, und Erzeugen des MAC, um die Integrität der Chiffretext-Daten zu gewährleisten,
**dadurch gekennzeichnet, dass**
der Verschlüsselungs-Schritt und der MAC-Erzeugungs-Schritt alternierend den Verschlüsselungs-Prozess und einen MAC-Erzeugungs-Prozess durch Teilen eines Verschlüsselungs-Moduls und einer Rückkopplungs-Schleife durchführen, wobei die eine Rückkopplungs-Schleife enthält:
einen Speicher zum jeweiligen Speichern und Ausgeben von Ergebnissen des Verschlüsselungs-Prozesses und des MAC-Erzeugungs-Prozesses, und
einen Selektor zum alternierenden Auswählen der Ergebnisse des Verschlüsselungs-Prozesses und des MAC-Erzeugungs-Prozesses von dem Speicher, um alternierend den Verschlüsselungs-Prozess und den MAC-Erzeugungs-Prozess durchzuführen.

4. Verschlüsselungs-Verfahren aufweisend:
einen Verschlüsselungs-Schritt zum Eingeben von zu verschlüsselnden Daten und zum Ausgeben von verschlüsselten Daten, und
einen MAC-Erzeugungs-Schritt zum Eingeben der von dem Verschlüsselungs-Schritt ausgegebenen verschlüsselten Daten und Erzeugen eines MAC zum Gewährleisten einer Integrität der verschlüsselten Daten,
wobei der MAC-Erzeugungs-Schritt vor Abschluss des Verschlüsselns der Daten durch den Verschlüsselungs-Schritt beginnt, den MAC zu erzeugen, und wobei Klartext-Daten, die wenigstens einen Klartext-Block Daten enthalten, unter Verwendung einer Verschlüsselungs-Einheit in Chiffretext-Daten verschlüsselt werden, und ein Mitteilungs-Authentifikations-Code (MAC) erzeugt wird, um eine Integrität der Chiffretext-Daten zu gewährleisten,
wobei der Verschlüsselungs-Schritt einen ersten Rückkopplungs-Schritt enthält, zum Rückkoppeln von Modul-Ausgabe-Block-Daten Tᵢ, die von einem Verschlüsselungs-Modul ausgegeben werden, wenn die Klartext-Block-Daten verschlüsselt werden, zum Eingeben der Klartext-Block-Daten, Durchführen eines Verschlüsselungs-Prozesses durch Rückkoppeln der Modul-Ausgabe-Block-Daten Tᵢ durch eine erste Rückkopplungs-Schleife, und Ausgeben von Chiffretext-Block-Daten,
wobei die von dem Verschlüsselungs-Schritt ausgegebenen Chiffretext-Block-Daten durch einen Zuführungs-Schritt dem MAC-Erzeugungs-Schritt zugeführt werden, und
wobei der MAC-Erzeugungs-Schritt einen zweiten Rückkopplungs-Schritt aufweist zum Rückkoppeln eines berechneten zwischenstuflichen MAC-Ergebnisses, zum Eingeben der Chiffretext-Block-Daten von dem Zuführungs-Schritt, Berechnen eines zwischenstuflichen MAC-Ergebnisses auf Grundlage der eingegebenen Chiffretext-Block-Daten, Rückkoppeln des zwischenstuflichen MAC-Ergebnisses als das berechnete zwischenstufliche MAC-Ergebnis durch den zweiten Rückkopplungs-Schritt, und Erzeugen des MAC, um die Integrität der Chiffretext-Daten zu gewährleisten,
**dadurch gekennzeichnet, dass**
der Verschlüsselungs-Schritt und der MAC-Erzeugungs-Schritt ein Verschlüsselungs-Modul und eine Rückkopplungs-Schleife teilen, um alternierend den Verschlüsselungs-Prozess und einen MAC-Erzeugungs-Prozess durchzuführen, wobei die eine Rückkopplungs-Schleife enthält:
einen Speicher zum jeweiligen Speichern und Ausgeben von Ergebnissen des Verschlüsselungs-Prozesses und des MAC-Erzeugungs-Prozesses, und
einen Selektor zum alternierenden Auswählen der Ergebnisse des Verschlüsselungs-Prozesses und des MAC-Erzeugungs-Prozesses von dem Speicher, um alternierend den Verschlüsselungs-Prozess und den MAC-Erzeugungs-Prozess durchzuführen.

5. Entschlüsselungs-Vorrichtung aufweisend:
eine Entschlüsselungs-Einheit (300) zum Eingeben von zu entschlüsselnden Daten und zum Ausgeben von entschlüsselten Daten, und
ein Mitteilungs-Authentifikations-Code- (MAC-) -Generator (400) zum Eingeben der von der Entschlüsselungs-Einheit ausgegebenen entschlüsselten Daten und Erzeugen eines MAC zum Gewährleisten einer Integrität von verschlüsselten Daten,
wobei der MAC-Generator vor Abschluss des Entschlüsselns der Daten durch die Entschlüsselungs-Einheit beginnt, den MAC zu erzeugen, und
wobei Chiffretext-Daten, die wenigstens einen Chiffretext-Block Daten enthalten, in Klartext-Daten entschlüsselt werden, und ein Mitteilungs-Authentifikations-Code (MAC) erzeugt wird, um eine Integrität der Chiffretext-Daten zu gewährleisten,
wobei die Entschlüsselungs-Einheit (300) eine erste Rückkopplungs-Schleife enthält zum Rückkoppeln von beim Entschlüsseln von Daten durch ein Entschlüsselungs-Modul erzeugten Modul-Ausgabe-Block-Daten, zum Eingeben der Chiffretext-Block-Daten Cᵢ, Entschlüsseln der Chiffretext-Block-Daten Cᵢ unter Verwendung der durch die erste Rückkopplungs-Schleife rückgekoppelten Modul-Ausgabe-Block-Daten,
und Ausgeben der Klartext-Block-Daten Mᵢ,
wobei die Entschlüsselungs-Vorrichtung ferner eine Zuleitung (69) zum Eingeben der Chiffretext-Block-Daten Cᵢ, die an die Entschlüsselungs-Einheit (300) eingegeben werden, und Ausgeben der Chiffretext-Block-Daten Cᵢ an den Mitteilungs-Authentifikations-Code- (MAC-) - Generator (400) aufweist, und
wobei der MAC-Generator (400) eine zweite Rückkopplungs-Schleife enthält zum Rückkoppeln eines berechneten zwischenstuflichen MAC-Ergebnisses Tᵢ, zum Eingeben der Chiffretext-Block-Daten Cᵢ von der Zuleitung (69), Berechnen eines zwischenstuflichen MAC-Ergebnisses auf Grundlage der eingegebenen Chiffretext-Block-Daten Cᵢ, Ausgeben des zwischenstuflichen MAC-Ergebnisses als das berechnete zwischenstufliche MAC-Ergebnis Tᵢ, Rückkoppeln des berechneten zwischenstuflichen MAC-Ergebnisses durch die zweite Rückkopplungs-Schleife, und Erzeugen des MAC, zum Gewährleisten der Integrität der Chiffretext-Daten,
**dadurch gekennzeichnet, dass**
die Entschlüsselungs-Einheit und der MAC-Generator ein Entschlüsselungs-Modul und eine Rückkopplungs-Schleife teilen und alternierend den Entschlüsselungs-Prozess und einen MAC-Erzeugungs-Prozess durchführen, wobei die eine Rückkopplungs-Schleife enthält:
einen Speicher zum Speichern und Ausgeben der Ergebnisse des Entschlüsselungs-Prozesses und des MAC-Erzeugungs-Prozesses, und
einen Selektor zum alternierenden Auswählen der an das Entschlüsselungs-Modul auszugebenden Ergebnisse des Entschlüsselungs-Prozesses und des MAC-Erzeugungs-Prozesses zum alternierenden Durchführen des Entschlüsselungs-Prozesses und des MAC-Erzeugungs-Prozesses.

6. Entschlüsselungs-Vorrichtung aufweisend:
eine Entschlüsselungs-Einheit (300) zum Eingeben von zu entschlüsselnden Daten und zum Ausgeben von entschlüsselten Daten, und
ein Mitteilungs-Authentifikations-Code- (MAC-) -Generator (400) zum Eingeben der zu entschlüsselnden Daten und Erzeugen eines MAC zum Gewährleisten einer Integrität von verschlüsselten Daten,
wobei der MAC-Generator vor Abschluss des Entschlüsselns der Daten durch die Entschlüsselungs-Einheit beginnt, den MAC zu erzeugen, und wobei Chiffretext-Daten, die wenigstens einen Chiffretext-Block Daten enthalten, in Klartext-Daten entschlüsselt werden, und ein Mitteilungs-Authentifikations-Code (MAC) erzeugt wird, um eine Integrität der Chiffretext-Daten zu gewährleisten,
wobei die Entschlüsselungs-Einheit (300) eine erste Rückkopplungs-Schleife enthält zum Rückkoppeln von Chiffretext-Block-Daten Cᵢ, zum Eingeben der Chiffretext-Block-Daten, Durchführen eines Entschlüsselungs-Prozesses durch Rückkoppeln der Chiffretext-Block-Daten Cᵢ durch die erste Rückkopplungs-Schleife, und Ausgeben der Klartext-Block-Daten,
wobei die Entschlüsselungs-Vorrichtung ferner eine Zuleitung (69) zum Eingeben der Chiffretext-Block-Daten Cᵢ, die an die Entschlüsselungs-Einheit (300) eingegeben werden, und Ausgeben der Chiffretext-Block-Daten an den Mitteilungs-Authentifikations-Code- (MAC-) -Generator (400) aufweist, und
wobei der Mitteilungs-Authentifikations-Code- (MAC-) -Generator (400) eine zweite Rückkopplungs-Schleife aufweist zum Rückkoppeln eines berechneten zwischenstuflichen MAC-Ergebnisses, zum Eingeben der Chiffretext-Block-Daten von der Zuleitung (69), Berechnen eines zwischenstuflichen MAC-Ergebnisses auf Grundlage der eingegebenen Chiffretext-Block-Daten, Ausgeben des zwischenstuflichen MAC-Ergebnisses als das berechnete zwischenstufliche MAC-Ergebnis, Rückkoppeln des berechneten zwischenstuflichen MAC-Ergebnisses durch die zweite Rückkopplungs-Schleife, und Erzeugen des MAC, um die Integrität der Chiffretext-Daten zu gewährleisten,
**dadurch gekennzeichnet, dass**
die Entschlüsselungs-Einheit und der MAC-Generator ein Entschlüsselungs-Modul und eine Rückkopplungs-Schleife teilen, um alternierend den Entschlüsselungs-Prozess und einen MAC-Erzeugungs-Prozess durchzuführen, wobei die eine Rückkopplungs-Schleife enthält:
einen Speicher zum jeweiligen Speichern und Ausgeben von Ergebnissen des Entschlüsselungs-Prozesses und des MAC-Erzeugungs-Prozesses, und
einen Selektor zum alternierenden Auswählen der Ergebnisse des Entschlüsselungs-Prozesses und des MAC-Erzeugungs-Prozesses von dem Speicher, um alternierend den Entschlüsselungs-Prozess und den MAC-Erzeugungs-Prozesses durchzuführen.

7. Entschlüsselungs-Verfahren aufweisend:
einen Entschlüsselungs-Schritt zum Eingeben von zu entschlüsselnden Daten und zum Ausgeben von entschlüsselten Daten, und
einen MAC-Erzeugungs-Schritt zum Eingeben der von dem Entschlüsselungs-Schritt ausgegebenen entschlüsselten Daten und Erzeugen eines MAC zum Gewährleisten einer Integrität der verschlüsselten Daten,
wobei der MAC-Erzeugungs-Schritt vor Abschluss des Entschlüsselns der Daten durch den Entschlüsselungs-Schritt beginnt, den MAC zu erzeugen, und wobei Chiffretext-Daten, die wenigstens einen Chiffretext-Block Daten enthalten, in Klartext-Daten entschlüsselt werden, und ein Mitteilungs-Authentifikations-Code (MAC) erzeugt wird zum Gewährleisten einer Integrität der Chiffretext-Daten,
wobei der Entschlüsselungs-Schritt einen ersten Rückkopplungs-Schritt enthält zum Rückkoppeln von Modul-Ausgabe-Block-Daten, die beim Entschlüsseln von Daten durch ein Entschlüsselungs-Modul erzeugt werden, Eingeben der Chiffretext-Block-Daten Cᵢ, Entschlüsseln der Chiffretext-Block-Daten Cᵢ unter Verwendung der durch eine erste Rückkopplungs-Schleife rückgekoppelten Modul-Ausgabe-Block-Daten, und Ausgeben von Klartext-Block-Daten Mᵢ,
wobei die an den Entschlüsselungs-Schritt eingegebenen Chiffretext-Block-Daten Cᵢ durch einen Zuführungs-Schritt dem MAC-Erzeugungs-Schritt zugeführt werden, und
wobei der MAC-Erzeugungs-Schritt einen zweiten Rückkopplungs-Schritt enthält zum Rückkoppeln eines berechneten zwischenstuflichen MAC-Ergebnisses Tᵢ, Eingeben der Chiffretext-Block-Daten Cᵢ von dem Zuführungs-Schritt, Berechnen eines zwischenstuflichen MAC-Ergebnisses auf Grundlage der eingegebenen Chiffretext-Block-Daten Cᵢ, Ausgeben des zwischenstuflichen MAC-Ergebnisses als das berechnete zwischenstufliche MAC-Ergebnis Tᵢ, Rückkoppeln des berechneten zwischenstuflichen MAC-Ergebnisses Tᵢ durch eine zweite Rückkopplungs-Schleife, und Erzeugen des MAC zum Gewährleisten der Integrität der Chiffretext-Daten,
**dadurch gekennzeichnet, dass**
der Entschlüsselungs-Schritt und der MAC-Erzeugungs-Schritt ein Entschlüsselungs-Modul und eine Rückkopplungs-Schleife teilen und alternierend einen Entschlüsselungs-Prozess und einen MAC-Erzeugungs-Prozess durchführen, wobei die eine Rückkopplungs-Schleife enthält:
einen Speicher zum Speichern und Ausgeben von Ergebnissen des Entschlüsselungs-Prozesses und des MAC-Erzeugungs-Prozesses, und
einen Selektor zum alternierenden Auswählen der an das Entschlüsselungs-Modul auszugebenden Ergebnisse des Entschlüsselungs-Prozesses und des MAC-Erzeugungs-Prozesses zum alternierenden Durchführen des Entschlüsselungs-Prozesses und des MAC-Erzeugungs-Prozesses.

8. Entschlüsselungs-Verfahren aufweisend:
einen Entschlüsselungs-Schritt zum Eingeben von zu entschlüsselnden Daten und zum Ausgeben von entschlüsselten Daten, und
einen MAC-Erzeugungs-Schritt zum Eingeben der zu entschlüsselnden Daten und Erzeugen eines MAC zum Gewährleisten einer Integrität der verschlüsselten Daten,
wobei der MAC-Erzeugungs-Schritt vor Abschluss des Entschlüsselns der Daten durch den Entschlüsselungs-Schritt beginnt, den MAC zu erzeugen, und wobei Chiffretext-Daten, die wenigstens einen Chiffretext-Block Daten enthalten, unter Verwendung einer Entschlüsselungs-Einheit in Klartext-Daten entschlüsselt werden, und ein Mitteilungs-Authentifikations-Code (MAC) erzeugt wird, um eine Integrität der Chiffretext-Daten zu gewährleisten,
wobei der Entschlüsselungs-Schritt einen ersten Rückkopplungs-Schritt enthält zum Rückkoppeln von Chiffretext-Block-Daten Cᵢ, zum Eingeben der Chiffretext-Block-Daten Cᵢ, Durchführen eines Entschlüsselungs-Prozesses der durch eine erste Rückkopplungs-Schleife rückgekoppelten Chiffretext-Block-Daten Cᵢ, und Ausgeben von Klartext-Block-Daten,
wobei die Chiffretext-Block-Daten, die an den Entschlüsselungs-Schritt eingegebenen werden, durch einen Zuführungs-Schritt dem MAC-Erzeugungs-Schritt zugeführt werden, und
wobei der MAC-Erzeugungs-Schritt einen zweiten Rückkopplungs-Schritt enthält zum Rückkoppeln eines berechneten zwischenstuflichen MAC-Ergebnisses, Eingeben der Chiffretext-Block-Daten Cᵢ von dem Zuführungs-Schritt, Berechnen eines zwischenstuflichen MAC-Ergebnisses auf Grundlage der eingegebenen Chiffretext-Block-Daten Cᵢ, Ausgeben des zwischenstuflichen MAC-Ergebnisses als das berechnete zwischenstufliche MAC-Ergebnis, Rückkoppeln des berechneten zwischenstuflichen MAC-Ergebnisses Tᵢ durch die zweite Rückkopplungs-Schleife, und Erzeugen des MAC, um die Integrität der Chiffretext-Daten zu gewährleisten,
**dadurch gekennzeichnet, dass**
der Entschlüsselungs-Schritt und der MAC-Erzeugungs-Schritt ein Entschlüsselungs-Modul und eine Rückkopplungs-Schleife teilen, um alternierend den Entschlüsselungs-Prozess und einen MAC-Erzeugungs-Prozess durchzuführen, wobei die eine Rückkopplungs-Schleife enthält:
einen Speicher zum jeweiligen Speichern und Ausgeben von Ergebnissen des Entschlüsselungs-Prozesses und des MAC-Erzeugungs-Prozesses, und
einen Selektor zum alternierenden Auswählen der Ergebnisse des Entschlüsselungs-Prozesses und des MAC-Erzeugungs-Prozesses von dem Speicher, um alternierend den Entschlüsselungs-Prozesses und den MAC-Erzeugungs-Prozess durchzuführen.

9. Computerlesbares Speichermedium zum Speichern eines Programms, das einen Computer Schritte für das in einem der Ansprüche 3 bis 4 beschriebene Verschlüsselungs-Verfahren ausführen lässt.

10. Computerlesbares Speichermedium zum Speichern eines Programms, das einen Computer Schritte für das in einem der Ansprüche 7 bis 8 beschriebene Entschlüsselungs-Verfahren ausführen lässt.

## Revendications

1. Appareil de chiffrement comportant :
une unité de chiffrement (100) pour introduire des données à chiffrer et générer en sortie des données chiffrées ; et
un générateur de codes d'authentification de messages (MAC) (200) pour introduire les données chiffrées générées en sortie à partir de l'unité de chiffrement et générer un code MAC en vue de garantir une intégrité des données chiffrées ;
dans lequel le générateur de codes MAC commence à générer le code MAC avant l'achèvement du chiffrement des données par l'unité de chiffrement, et dans lequel des données de texte en clair incluant au moins une donnée de bloc de texte en clair sont chiffrées sous la forme de données de texte chiffré en utilisant l'unité de chiffrement, et un code d'authentification de message (MAC) est généré en vue de garantir une intégrité des données de texte chiffré ;
dans lequel l'unité de chiffrement (100) présente une première boucle de rétroaction en vue de réinjecter des données de bloc de texte chiffré Cᵢ, générées en sortie par l'unité de chiffrement (100), dans l'unité de chiffrement (100), lorsque les données de bloc de texte en clair sont chiffrées par l'unité de chiffrement (100), pour introduire les données de texte en clair, mettre en oeuvre un processus de chiffrement en réinjectant les données de bloc de texte chiffré Cᵢ à travers la première boucle de rétroaction, et générer en sortie les données de bloc de texte chiffré Cᵢ;
dans lequel l'appareil de chiffrement comporte en outre une ligne d'alimentation (69) pour introduire les données de bloc de texte chiffré Cᵢ à partir de l'unité de chiffrement (100), et générer en sortie les données de bloc de texte chiffré Cᵢ vers le générateur de codes d'authentification de messages (MAC) (200) ; et
dans lequel le générateur de codes d'authentification de messages (MAC) (200) présente une seconde boucle de rétroaction en vue de réinjecter un résultat de code MAC intermédiaire calculé Tᵢ, pour introduire les données de bloc de texte chiffré Cᵢ à partir de la ligne d'alimentation (69), calculer informatiquement un résultat de code MAC intermédiaire sur la base des données de bloc de texte chiffré Cᵢ introduites, réinjecter le résultat de code MAC intermédiaire sous la forme du résultat de code MAC intermédiaire calculé Tᵢ par la seconde boucle de rétroaction, et générer le code MAC en vue de garantir l'intégrité des données de texte chiffré ;
***caractérisé en ce que** :*
l'unité de chiffrement et le générateur de codes MAC mettent en oeuvre de manière alternée le processus de chiffrement et un processus de génération de codes MAC en partageant un module de chiffrement et une boucle de rétroaction (67, 68), dans lequel ladite une boucle de rétroaction (67, 68) inclut :
une mémoire destinée à stocker et à générer en sortie, respectivement, les résultats du processus de chiffrement et du processus de génération de codes MAC ; et
un sélecteur destiné à sélectionner de façon alternée les résultats du processus de chiffrement et du processus de génération de codes MAC à partir de la mémoire en vue de mettre en oeuvre de façon alternée le processus de chiffrement et le processus de génération de codes MAC.

2. Appareil de chiffrement comportant :
une unité de chiffrement (100) pour introduire des données à chiffrer et générer en sortie des données chiffrées ; et
un générateur de codes d'authentification de messages (MAC) (200) pour introduire les données chiffrées générées en sortie à partir de l'unité de chiffrement et générer un code MAC en vue de garantir une intégrité des données chiffrées ;
dans lequel le générateur de codes MAC commence à générer le code MAC avant l'achèvement du chiffrement des données par l'unité de chiffrement, et dans lequel des données de texte en clair incluant au moins une donnée de bloc de texte en clair sont chiffrées, et un code d'authentification de message (MAC) est généré en vue de garantir une intégrité de données de texte chiffré ;
dans lequel l'unité de chiffrement (100) présente une première boucle de rétroaction en vue de réinjecter des données de bloc de sortie de module Tᵢ générées en sortie à partir du module de chiffrement (51) de l'unité de chiffrement (100) vers le module de chiffrement (51), lorsque les données de bloc de texte en clair sont chiffrées par l'unité de chiffrement (100), pour introduire les données de texte en clair, mettre en oeuvre un processus de chiffrement en réinjectant les données de bloc de sortie de module Tᵢ à travers la première boucle de rétroaction, et générer en sortie les données de bloc de texte chiffré ;
dans lequel l'appareil de chiffrement comporte en outre une ligne d'alimentation (69) pour introduire les données de bloc de texte chiffré à partir de l'unité de chiffrement (100) et générer en sortie les données de bloc de texte chiffré vers le générateur de codes d'authentification de messages (MAC) (200) ; et
dans lequel le générateur de codes MAC (200) présente une seconde boucle de rétroaction en vue de réinjecter un résultat de code MAC intermédiaire calculé, pour introduire les données de bloc de texte chiffré à partir de la ligne d'alimentation (69), calculer informatiquement un résultat de code MAC intermédiaire sur la base des données de bloc de texte chiffré introduites, réinjecter le résultat de code MAC intermédiaire sous la forme du résultat de code MAC intermédiaire calculé à travers la seconde boucle de rétroaction, et générer le code MAC en vue de garantir l'intégrité des données de texte chiffré ;
***caractérisé en ce que** :*
l'unité de chiffrement et le générateur de codes MAC partagent un module de chiffrement et une boucle de rétroaction (67, 68) en vue de mettre en oeuvre de manière alternée le processus de chiffrement et un processus de génération de codes MAC, dans lequel ladite une boucle de rétroaction inclut :
une mémoire destinée à stocker et à générer en sortie, respectivement, les résultats du processus de chiffrement et du processus de génération de codes MAC ; et
un sélecteur destiné à sélectionner de façon alternée les résultats du processus de chiffrement et du processus de génération de codes MAC à partir de la mémoire en vue de mettre en oeuvre de façon alternée le processus de chiffrement et le processus de génération de codes MAC.

3. Procédé de chiffrement comportant :
une étape de chiffrement pour introduire des données à chiffrer et générer en sortie des données chiffrées ; et
une étape de génération de codes MAC pour introduire les données chiffrées générées en sortie à partir de l'étape de chiffrement et générer un code MAC en vue de garantir une intégrité des données chiffrées ;
dans lequel l'étape de génération de codes MAC commence à générer le code MAC avant l'achèvement du chiffrement des données par l'étape de chiffrement, et dans lequel des données de texte en clair incluant au moins une donnée de bloc de texte en clair sont chiffrées sous la forme de données de texte chiffré en utilisant une unité de chiffrement, et un code d'authentification de message (MAC) est généré en vue de garantir une intégrité des données de texte chiffré ;
dans lequel l'étape de chiffrement inclut une première étape de réinjection en vue de réinjecter des données de bloc de texte chiffré Cᵢ générées en sortie à partir de l'unité de chiffrement lorsque l'unité de chiffrement chiffre des données de bloc de texte en clair, introduire les données de bloc de texte en clair, mettre en oeuvre un processus de chiffrement en réinjectant les données de bloc de texte chiffré Cᵢ à travers une première boucle de rétroaction, et générer en sortie les données de bloc de texte chiffré C_{i ;}
dans lequel les données de bloc de texte chiffré Cᵢ générées en sortie par l'étape de chiffrement sont injectées, par une étape d'injection, dans l'étape de génération de codes MAC ; et
dans lequel l'étape de génération de codes MAC inclut une seconde étape de réinjection en vue de réinjecter un résultat de code MAC intermédiaire calculé, introduire les données de bloc de texte chiffré Cᵢ à partir de l'étape d'injection, calculer informatiquement un résultat de code MAC intermédiaire sur la base des données de bloc de texte chiffré Cᵢ introduites, réinjecter le résultat de code MAC intermédiaire sous la forme du résultat de code MAC intermédiaire calculé à travers la seconde étape de réinjection, et générer le code MAC en vue de garantir l'intégrité des données de texte chiffré ;
***caractérisé en ce que** :*
l'étape de chiffrement et l'étape de génération de codes MAC mettent en oeuvre de manière alternée le processus de chiffrement et un processus de génération de codes MAC en partageant un module de chiffrement et une boucle de rétroaction, dans lequel ladite boucle de rétroaction inclut :
une mémoire destinée à stocker et à générer en sortie, respectivement, les résultats du processus de chiffrement et du processus de génération de codes MAC ; et
un sélecteur destiné à sélectionner de façon alternée les résultats du processus de chiffrement et du processus de génération de codes MAC à partir de la mémoire en vue de mettre en oeuvre de façon alternée le processus de chiffrement et le processus de génération de codes MAC.

4. Procédé de chiffrement comportant :
une étape de chiffrement pour introduire des données à chiffrer et générer en sortie des données chiffrées ; et
une étape de génération de codes MAC pour introduire les données chiffrées générées en sortie à partir de l'étape de chiffrement, et générer un code MAC en vue de garantir une intégrité des données chiffrées ;
dans lequel l'étape de génération de codes MAC commence à générer le code MAC avant l'achèvement du chiffrement des données par l'étape de chiffrement, et dans lequel des données de texte en clair incluant au moins une donnée de bloc de texte en clair sont chiffrées sous la forme de données de texte chiffré en utilisant une unité de chiffrement, et un code d'authentification de message (MAC) est généré en vue de garantir une intégrité des données de texte chiffré ;
dans lequel l'étape de chiffrement présente une première étape de réinjection en vue de réinjecter des données de bloc de sortie de module Tᵢ générées en sortie à partir d'un module de chiffrement lorsque les données de bloc de texte en clair sont chiffrées, pour introduire les données de bloc de texte en clair, mettre en oeuvre un processus de chiffrement en réinjectant les données de bloc de sortie de module Tᵢ à travers une première boucle de rétroaction, et générer en sortie des données de bloc de texte chiffré ;
dans lequel les données de bloc de texte chiffré générées en sortie par l'étape de chiffrement sont injectées, par une étape d'injection, dans l'étape de génération de codes MAC ; et
dans lequel l'étape de génération de codes MAC présente une seconde étape de réinjection en vue de réinjecter un résultat de code MAC intermédiaire calculé, pour introduire les données de bloc de texte chiffré à partir de l'étape d'injection, calculer informatiquement un résultat de code MAC intermédiaire sur la base des données de bloc de texte chiffré introduites, réinjecter le résultat de code MAC intermédiaire sous la forme du résultat de code MAC intermédiaire calculé à travers la seconde étape de réinjection, et générer le code MAC en vue de garantir l'intégrité des données de texte chiffré ;
***caractérisé en ce que** :*
l'étape de chiffrement et l'étape de génération de codes MAC partagent un module de chiffrement et une boucle de rétroaction en vue de mettre en oeuvre de manière alternée le processus de chiffrement et un processus de génération de codes MAC, dans lequel ladite une boucle de rétroaction inclut :
une mémoire destinée à stocker et à générer en sortie, respectivement, les résultats du processus de chiffrement et du processus de génération de codes MAC ; et
un sélecteur destiné à sélectionner de façon alternée les résultats du processus de chiffrement et du processus de génération de codes MAC à partir de la mémoire en vue de mettre en oeuvre de façon alternée le processus de chiffrement et le processus de génération de codes MAC.

5. Appareil de déchiffrement comportant :
une unité de déchiffrement (300) pour introduire des données à déchiffrer et générer en sortie des données déchiffrées ; et
un générateur de codes d'authentification de messages (MAC) (400) pour introduire les données déchiffrées générées en sortie à partir de l'unité de déchiffrement, et générer un code MAC en vue de garantir une intégrité de données chiffrées ;
dans lequel le générateur de codes MAC commence à générer le code MAC avant l'achèvement du déchiffrement des données par l'unité de déchiffrement, et dans lequel des données de texte chiffré incluant au moins une donnée de bloc de texte chiffré sont déchiffrées sous la forme de données de texte en clair, et un code d'authentification de message (MAC) est généré en vue de garantir une intégrité de données de texte chiffré ;
dans lequel l'unité de déchiffrement (300) inclut une première boucle de rétroaction en vue de réinjecter des données de bloc de sortie de module générées lors du déchiffrement de données par un module de déchiffrement, pour introduire les données de bloc de texte chiffré Cᵢ, déchiffrer les données de bloc de texte chiffré Cᵢ en utilisant les données de bloc de sortie de module réinjectées à travers la première boucle de rétroaction, et générer en sortie des données de bloc de texte en clair M_{i;}
dans lequel l'appareil de déchiffrement comporte en outre une ligne d'alimentation (69) pour introduire les données de bloc de texte chiffré Cᵢ qui sont introduites dans l'unité de déchiffrement (300), et générer en sortie les données de bloc de texte chiffré Cᵢ vers le générateur de codes d'authentification de messages (MAC) (400) ; et
dans lequel le générateur de codes MAC (400) inclut une seconde boucle de rétroaction en vue de réinjecter un résultat de code MAC intermédiaire calculé Tᵢ pour introduire les données de bloc de texte chiffré Cᵢ à partir de la ligne d'alimentation (69), calculer informatiquement un résultat de code MAC intermédiaire sur la base des données de bloc de texte chiffré Cᵢ introduites, générer en sortie le résultat de code MAC intermédiaire sous la forme du résultat de code MAC intermédiaire calculé Tᵢ, réinjecter le résultat de code MAC intermédiaire calculé Tᵢ à travers la seconde boucle de rétroaction, et générer le code MAC en vue de garantir l'intégrité de données de texte chiffré ;
***caractérisé en ce que** :*
l'unité de déchiffrement et le générateur de codes MAC partagent un module de déchiffrement et une boucle de rétroaction et mettent en oeuvre de manière alternée un processus de déchiffrement et un processus de génération de codes MAC, dans lequel ladite une boucle de rétroaction inclut :
une mémoire stockant et générant en sortie des résultats du processus de déchiffrement et du processus de génération de codes MAC ; et
un sélecteur destiné à sélectionner de manière alternée les résultats du processus de déchiffrement et du processus de génération de codes MAC à générer en sortie vers le module de déchiffrement en vue de mettre en oeuvre de manière alternée le processus de déchiffrement et le processus de génération de codes MAC.

6. Appareil de déchiffrement comportant :
une unité de déchiffrement (300) pour introduire des données à déchiffrer et générer en sortie des données déchiffrées ; et
un générateur de codes d'authentification de messages (MAC) (400) pour introduire les données à déchiffrer et générer un code MAC en vue de garantir une intégrité de données chiffrées ;
dans lequel le générateur de codes MAC commence à générer le code MAC avant l'achèvement du déchiffrement des données par l'unité de déchiffrement, et dans lequel des données de texte chiffré incluant au moins une donnée de bloc de texte chiffré sont déchiffrées sous la forme de données de texte en clair en utilisant un module de déchiffrement, et un code d'authentification de message (MAC) est généré en vue de garantir une intégrité des données de texte chiffré ;
dans lequel l'unité de déchiffrement (300) présente une première boucle de rétroaction en vue de réinjecter des données de bloc de texte chiffré Cᵢ, pour introduire les données de bloc de texte chiffré, mettre en oeuvre un processus de déchiffrement en réinjectant les données de bloc de texte chiffré Cᵢ à travers la première boucle de rétroaction, et générer en sortie des données de bloc de texte en clair ;
dans lequel l'appareil de déchiffrement comporte en outre une ligne d'alimentation (69) pour introduire les données de bloc de texte chiffré qui sont introduites dans l'unité de déchiffrement (300) et générer en sortie les données de bloc de texte chiffré vers le générateur de codes d'authentification de messages (MAC) (400) ; et
dans lequel le générateur de codes d'authentification de messages (MAC) (400) présente une seconde boucle de rétroaction en vue de réinjecter un résultat de code MAC intermédiaire calculé, pour introduire les données de bloc de texte chiffré à partir de la ligne d'alimentation (69), calculer informatiquement un résultat de code MAC intermédiaire sur la base des données de bloc de texte chiffré introduites, générer en sortie le résultat de code MAC intermédiaire sous la forme du résultat de code MAC intermédiaire calculé, réinjecter le résultat de code MAC intermédiaire calculé à travers la seconde boucle de rétroaction, et générer le code MAC en vue de garantir l'intégrité des données de texte chiffré ;
***caractérisé en ce que** :*
l'unité de déchiffrement et le générateur de codes MAC partagent un module de déchiffrement et une boucle de rétroaction en vue de mettre en oeuvre de manière alternée le processus de déchiffrement et un processus de génération de codes MAC, dans lequel ladite une boucle de rétroaction inclut :
une mémoire destinée à stocker et à générer en sortie, respectivement, des résultats du processus de déchiffrement et du processus de génération de codes MAC ; et
un sélecteur destiné à sélectionner de façon alternée les résultats du processus de déchiffrement et du processus de génération de codes MAC à partir de la mémoire en vue de mettre en oeuvre de façon alternée le processus de déchiffrement et le processus de génération de codes MAC.

7. Procédé de déchiffrement comportant :
une étape de déchiffrement pour introduire des données à déchiffrer et générer en sortie des données déchiffrées ; et
une étape de génération de codes MAC pour introduire les données déchiffrées générées en sortie à partir de l'étape de déchiffrement et générer un code MAC en vue de garantir une intégrité des données chiffrées ;
dans lequel l'étape de génération de codes MAC commence à générer le code MAC avant l'achèvement du déchiffrement des données par l'étape de déchiffrement, et dans lequel des données de texte chiffré incluant au moins une donnée de bloc de texte chiffré sont déchiffrées sous la forme de données de texte en clair, et un code d'authentification de message (MAC) est généré en vue de garantir une intégrité des données de texte chiffré ;
dans lequel l'étape de déchiffrement inclut une première étape de réinjection en vue de réinjecter des données de bloc de sortie de module générées lors du déchiffrement de données par un module de déchiffrement, introduire les données de bloc de texte chiffré Cᵢ, déchiffrer les données de bloc de texte chiffré Cᵢ en utilisant les données de bloc de sortie de module réinjectées à travers une première boucle de rétroaction, et générer en sortie des données de bloc de texte en clair Mᵢ ;
dans lequel les données de bloc de texte chiffré Cᵢ qui sont introduites dans l'étape de déchiffrement sont injectées, par une étape d'injection, dans l'étape de génération de codes MAC ; et
dans lequel l'étape de génération de codes MAC inclut une seconde étape de réinjection en vue de réinjecter un résultat de code MAC intermédiaire calculé Tᵢ, introduire les données de bloc de texte chiffré Cᵢ à partir de l'étape d'injection, calculer informatiquement un résultat de code MAC intermédiaire sur la base des données de bloc de texte chiffré Cᵢ introduites, générer en sortie le résultat de code MAC intermédiaire sous la forme du résultat de code MAC intermédiaire calculé Tᵢ, réinjecter le résultat de code MAC intermédiaire calculé Tᵢ par une seconde boucle de rétroaction, et générer le code MAC en vue de garantir l'intégrité de données de texte chiffré ;
***caractérisé en ce que** :*
l'étape de déchiffrement et l'étape de génération de codes MAC partagent un module de déchiffrement et une boucle de rétroaction et mettent en oeuvre de manière alternée un processus de déchiffrement et un processus de génération de codes MAC, dans lequel ladite boucle de rétroaction inclut :
une mémoire stockant et générant en sortie des résultats du processus de déchiffrement et du processus de génération de codes MAC ; et
un sélecteur destiné à sélectionner de manière alternée les résultats du processus de déchiffrement et du processus de génération de codes MAC à générer en sortie vers le module de déchiffrement, en vue de mettre en oeuvre de manière à alterner le processus de déchiffrement et le processus de génération de codes MAC.

8. Procédé de déchiffrement comportant :
une étape de déchiffrement pour introduire des données à déchiffrer et générer en sortie des données déchiffrées ; et
une étape de génération de codes MAC pour introduire les données à déchiffrer et générer un code MAC en vue de garantir une intégrité des données chiffrées ;
dans lequel l'étape de génération de codes MAC commence à générer le code MAC avant l'achèvement du déchiffrement des données par l'étape de déchiffrement, et dans lequel des données de texte chiffré incluant au moins une donnée de bloc de texte chiffré sont déchiffrées sous la forme de données de texte en clair en utilisant une unité de déchiffrement, et un code d'authentification de message (MAC) est généré en vue de garantir une intégrité des données de texte chiffré ;
dans lequel l'étape de déchiffrement présente une première étape de réinjection en vue de réinjecter des données de bloc de texte chiffré Cᵢ, pour introduire les données de bloc de texte chiffré, mettre en oeuvre un processus de déchiffrement des données de bloc de texte chiffré Cᵢ réinjectées à travers une première boucle de rétroaction, et générer en sortie des données de bloc de texte en clair ;
dans lequel les données de bloc de texte chiffré qui sont introduites dans l'étape de déchiffrement sont injectées, par une étape d'injection, dans l'étape de génération de codes MAC ; et
dans lequel l'étape de génération de codes MAC présente une seconde étape de réinjection en vue de réinjecter un résultat de code MAC intermédiaire calculé, introduire les données de bloc de texte chiffré Cᵢ à partir de l'étape d'injection, calculer informatiquement un résultat de code MAC intermédiaire sur la base des données de bloc de texte chiffré Cᵢ introduites, générer en sortie le résultat de code MAC intermédiaire sous la forme du résultat de code MAC intermédiaire calculé, réinjecter le résultat de code MAC intermédiaire calculé à travers la seconde étape de réinjection, et générer le code MAC en vue de garantir l'intégrité des données de texte chiffré ;
***caractérisé en ce que** :*
l'étape de déchiffrement et l'étape de génération de codes MAC partagent un module de déchiffrement et une boucle de rétroaction en vue de mettre en oeuvre de manière alternée le processus de déchiffrement et un processus de génération de codes MAC, dans lequel ladite boucle de rétroaction inclut :
une mémoire destinée à stocker et à générer en sortie, respectivement, des résultats du processus de déchiffrement et du processus de génération de codes MAC ; et
un sélecteur destiné à sélectionner de façon alternée les résultats du processus de déchiffrement et du processus de génération de codes MAC à partir de la mémoire en vue de mettre en oeuvre de façon alternée le processus de déchiffrement et le processus de génération de codes MAC.

9. Support de stockage lisible par ordinateur stockant un programme pour amener un ordinateur à exécuter les étapes du procédé de chiffrement décrit dans l'une quelconque des revendications 3 à 4.

10. Support de stockage lisible par ordinateur stockant un programme pour amener un ordinateur à exécuter les étapes du procédé de déchiffrement décrit dans l'une quelconque des revendications 7 à 8.
